# EUROPEAN PATENT SPECIFICATION

(11) **EP 4 460 014 B1**
(45) Date of publication and mention of the grant of the patent: **29.07.2026**
(21) Application number: 23752431.9
(22) Date of filing: 10.02.2023
(51) Int. Cl.: H04N 23/68, H04N 23/50, H04N 23/52, H04N 23/54, H04N 23/57, G02B 27/64, G03B 5/00, G03B 30/00

(54) **IMAGE SENSOR DRIVING MODULE, OPTICAL ASSEMBLY, CAMERA MODULE AND ELECTRONIC DEVICE**
BILDSENSORANSTEUERUNGSMODUL, OPTISCHE ANORDNUNG, KAMERAMODUL UND ELEKTRONISCHE VORRICHTUNG
MODULE DE COMMANDE DE CAPTEUR D'IMAGE, ENSEMBLE OPTIQUE, MODULE DE CAMÉRA ET DISPOSITIF ÉLECTRONIQUE

(30) Priority: 11.02.2022 CN 202210129798; 07.02.2023 CN 202310142208
(43) Date of publication of application: 06.11.2024
(73) Proprietor: Huawei Technologies Co., Ltd., Shenzhen, Guangdong 518129 (CN)
(72) Inventor: PENG, Shusheng, Shenzhen, Guangdong 518129 (CN); LV, Quanming, Shenzhen, Guangdong 518129 (CN)
(74) Representative: Thun, Clemens
(86) International application number: PCT/CN2023/075431
(87) International publication number: WO 2023/151652

(56) References cited:
- CN-A- 112 492 179
- CN-A- 112 804 417
- CN-A- 112 969 017
- CN-A- 113 489 886
- CN-A- 113 691 701
- CN-U- 215 344 785
- US-A1- 2020 120 242
- US-A1- 2020 174 274
- US-B1- 7 881 598

## Description

### TECHNICAL FIELD

Possible implementations of this application relate to the field of shooting technologies, and in particular, to an image sensor drive module, an optical assembly, a camera module, and an electronic device.

### BACKGROUND

When an electronic device (for example, a mobile phone or a tablet computer) with a shooting function performs shooting, shot photos may be blurred, ghosted, or fuzzy due to slight shaking. For example, a human body holding an object physiologically shakes to a given extent. The human body is often in a moving state during image shooting, and these irregular and non-autonomic shakes or motion vibrations may blur shot images and cause poor user experience. Therefore, the electronic device with a shooting function needs to have an automatic focus (AF) function and an optical image stabilization (OIS) function.

During design of a camera module, a drive structure is taken into consideration to drive an image sensor to move. The drive structure drives the image sensor to move to adjust a specific position and posture of the image sensor, to implement an image stabilization function of the camera module. CN215344785U discloses an anti-shake mechanism for anti-shake of a photosensitive element, comprising: a carrying assembly; a movable part connected to the photosensitive element and arranged on the carrying assembly; a driving module, comprising a first driving assembly fixedly arranged on the carrying assembly and a second driving assembly arranged on the movable part, wherein the first and second driving assemblies cooperate to drive the movable part to move the photosensitive element. CN112804417A discloses an image stabilization camera module, comprising a ferromagnetic member, which is a smooth iron sheet with a small friction coefficient, to reduce the friction force between a circuit board and an arrangement of balls. US2020120242A1 discloses an image sensor driving mechanism comprising: a fixing portion; an image sensor assembly capable of being moved with respect to the fixing portion; a support mechanism for supporting said image sensor assembly so that it can be moved with respect to said fixing portion; and a driving mechanism comprising a coil portion and a magnet portion, and the coil portion drives the image sensor assembly to be moved. CN113489886A discloses a camera module, comprising: a housing; a lens disposed in the housing; an image sensor, disposed in the housing and arranged opposite to the lens in a direction parallel to the optical axis of the lens; and an anti-shake mechanism, connected to the image sensor to drive the image sensor to move in a direction perpendicular to the optical axis of the lens or to rotate around the optical axis of the lens.

With electronic devices developed to be light, thin, and multi-functional, during design of the camera module, how to design the drive structure of the image sensor to meet moving stability of the image sensor and ensure image quality is a subject of continuous exploration in the industry.

### SUMMARY

This application provides an image sensor drive module, an optical assembly, a camera module, and an electronic device, to ensure moving stability of an image sensor and image quality. This problem is solved by the subject matter of the independent claims. Further implementation forms are provided in the dependent claims.

According to a first aspect, this application provides an image sensor drive module according to claim 1, wherein the image sensor drive module is used in a camera module and comprises: a drive unit, comprising a fixing member and a movable member that can move relative to each other; a fixing base, configured to bear the fixing member; and a movable base, comprising a bearing part, a fixing part, and a connecting part, wherein the connecting part is configured to implement mechanical and electrical connection between the bearing part and the fixing part, the bearing part is configured to bear an image sensor and the movable member, and the fixing part is connected to the fixing base, wherein a partial structure of the bearing part and a partial structure of the fixing base form a retention structure, the retention structure is configured to provide a retention force for the bearing part, the drive unit is configured to drive the bearing part to move relative to the fixing base, and contact between the bearing part and the fixing base is maintained by the retention force of the retention structure, wherein the connecting part of the movable base forms at least a part of the retention structure, the connecting part is of an elastic structure, and an elastic force of the connecting part acts on the bearing part to form the retention force, wherein a connection point between the connecting part and the fixing part is a first position, a connection point between the connecting part and the bearing part is a second position, elastic potential energy exists between the first position and the second position, and the elastic potential energy forms the retention force, wherein the connecting part is of a thin stripe-shaped spring arm structure connected between the fixing part and the bearing part, and the bearing part, the connecting part, and the fixing part are integrally formed.

In a conventional camera module, a mobile station of an image sensor is floated relative to a bottom plate of the module. Space between the mobile station and the bottom plate not only increases a size of the camera module in a direction of an optical axis, but also easily causes tilts of the mobile station and vibrations in the direction of the optical axis, resulting in deterioration of imaging quality. In addition, air thermal resistance is high, heat of the image sensor and a drive circuit is hard to dissipate, and a junction temperature of the image sensor is excessively high (for example, is above 70 degrees, and even reaches 90 degrees), resulting in excessive imaging noise of the image sensor and affecting the imaging quality. In this application, the retention structure is disposed to ensure contact between the bearing part and a fixing platform. This can ensure that there is no displacement in the direction of the optical axis in a moving process of the image sensor, and improve stability of the image sensor in the moving process. A moving route of the image sensor may be limited to a stable plane. This can avoid axial vibrations or tilts generated by the image sensor in the moving process (to be specific, reduce crosstalk of the displacement in the direction of the optical axis of the image sensor and a rotation direction of the image sensor), and can ensure quality and stability of image data obtained by the image sensor. In a design solution in which the mobile station of the image sensor is floated relative to the bottom plate of the module, a position detection sensor in the direction of the optical axis needs to be disposed on the mobile station. In this application, because the image sensor has no displacement in the direction of the optical axis, a sensor for detecting a position in the direction of the optical axis does not need to be configured in this application. This can reduce costs of the image sensor drive module, simplify a structure of a component disposed on the movable base, and help implement a small size of the movable base.

In this application, thermal resistance between the bearing part and the fixing base can be further reduced by using the contact between the bearing part and the fixing base, and heat of the bearing part can be better conducted to one side of an outer surface of the fixing base by using the contact relationship between the bearing part and the fixing part, thereby improving a thermal conducting capability of the image sensor drive module. Heat dissipation efficiency of the image sensor and the drive unit can be optimized, and the deterioration of the imaging quality caused by an excessively high temperature of the camera module in a video shooting process or a long-term shooting process is avoided.

In a possible implementation, the connecting part forms at least a part of the retention structure, the connecting part is of an elastic structure, and an elastic force of the connecting part acts on the bearing part to form the retention force. In this implementation, the elastic force of the connecting part is used as the retention force to ensure the contact between the bearing part and the fixing base, and another retention structure is added other than the fixing base and the movable base when it may be needed. The connecting part can not only ensure that the bearing part moves under a driving force of the drive unit, but also provide the retention force. A dual-function design of the connecting part facilitates miniaturization of a size of the image sensor drive module.

In a possible implementation, a connection point between the connecting part and the fixing part is a first position, a connection point between the connecting part and the bearing part is a second position, elastic potential energy exists between the first position and the second position, and the elastic potential energy forms the retention force. This solution provides an embodiment of how to form the elastic force of the connecting part. Forming the elastic potential energy between the first position and the second position uses an assembly position of the connecting part. This helps ensure miniaturization of the size of the image sensor drive module.

In a possible implementation, the fixing base includes a fixing platform, the bearing part is in contact with an inner surface of the fixing platform, the bearing part is configured to bear the image sensor to move on the inner surface of the fixing platform, the image sensor is located on a light emergent side of a lens assembly of the camera module, the inner surface of the fixing platform is perpendicular to the optical axis of the camera module, a distance that is between the first position and the inner surface of the fixing platform and that is in a direction of an optical axis is less than a distance that is between the second position and the inner surface of the fixing platform and that is in the direction of the optical axis, and elastic tension of the connecting part acts on the second position to form the retention force toward the fixing platform. In this solution, distance relationships between the first position and the second position, and the fixing platform are determined in a process of assembling the movable base. This can provide a pulling force of the second position toward the fixing platform, in other words, form the retention force. Forming the retention force in this solution is implemented in the assembly process. For the connecting part of the movable base, a structure of the connecting part does not need to be specially designed in a manufacturing process of the connecting part for considering forming the retention force. This can reduce manufacturing costs.

In another implementation, the connecting part forms at least a part of the retention structure, and the fixing part and the bearing part may be designed to be non-coplanar in a manufacturing process of the movable base. There is a height difference in the direction of the optical axis between the first position and the second position before assembly. In the assembly process, the first position and the second position may be assembled to be in a coplanar state. Alternatively, in the assembly process, a specific physical position of the first position or the second position may be adjusted to store energy, to be specific, store the elastic potential energy in the connecting part. In addition, a force, of the elastic potential energy, acting on the bearing part is the retention force toward the fixing platform. This solution helps implement miniaturization of the size of the assembled image sensor drive module.

In a possible implementation, a magnetic member is disposed on the bearing part, the magnetic member and a part of the fixing base configured to be in contact with the bearing part form at least a part of the retention structure, the part of the fixing base configured to be in contact with the bearing part has a magnetic conductive material, and a magnetic attraction force between the magnetic member and the fixing base forms at least a part of the retention force. In this solution, the magnetic member is disposed on the bearing part, and the fixing platform is designed to cooperate with the magnetic member to form the magnetic attraction force. A service life and stability of the retention force can be ensured by using the magnetic attraction force as the retention force.

In a possible implementation, the magnetic member includes at least two magnets, the at least two magnets are disposed on the bearing part in a dot-shaped distribution state and are adjacent to an outer edge of the bearing part, and the outer edge of the bearing part is edge positions of the bearing part toward the fixing part. Specifically, a quantity of magnets may be three or four. When there are three magnets, the three magnets may constitute one plane. This can ensure surface contact of a contact surface between the bearing part and the fixing base. When there are four magnets, the magnets may be symmetrically distributed at the four external corner positions of the image sensor. This helps ensure moving stability of the image sensor. In this solution, the magnets are disposed on the outer edge of the bearing part, so that positions of the magnets are away from the image sensor as far as possible, and impact of magnetic fields generated by the magnets on the image sensor is reduced.

**In** a possible implementation, the magnetic member includes at least two magnetic stripes, the magnetic stripes are all of a long-stripe shape, the at least two magnetic stripes are symmetrically distributed on the bearing part and are adjacent to an outer edge of the bearing part, and the outer edge of the bearing part is edge positions of the bearing part toward the fixing part. Disposing the long stripe-shaped magnetic stripes not only provides a large magnetic attraction force, but also facilitates assembly and fastening. In this embodiment of this application, the magnetic attraction force between the magnetic member disposed on the bearing part and the fixing base needs to ensure that the bearing part can maintain contact with the fixing base in a moving process, and the magnetic attraction force needs to be controlled within a preset range, in other words, the magnetic attraction force cannot be excessively large. If the magnetic attraction force is excessively large, the drive unit may be unable to drive the bearing part to move, or efficiency of moving the bearing part may be affected.

In a possible implementation, the movable member is a magnetic drive member, the fixing member is a coil drive member, the magnetic member includes the magnetic drive member, and a magnetic attraction force between the magnetic drive member and the fixing base forms at least a part of the retention force. In this solution, the magnetic drive member is used to form the retention structure. This facilitates a design of the miniaturization of the size of the image sensor drive module.

In a possible implementation, a magnetic member is disposed on the fixing base, a part of the bearing part has a magnetic conductive material, the part of the bearing part having the magnetic conductive material is a magnetic attraction member, the magnetic member and the magnetic attraction member form at least a part of the retention structure, the magnetic member is located at a position of a contact surface between the fixing base and the bearing part, and a magnetic attraction force between the magnetic member and the magnetic attraction member forms the retention force. In this solution, the magnetic member is disposed on the fixing platform, and the magnetic attraction member, for example, a steel plate, is correspondingly disposed on the bearing part. This design can reduce impact of the magnetic member on the drive unit and the image sensor, and ensure moving stability of the image sensor and quality of a generated image signal.

In a possible implementation, the magnetic member is located on a surface that is of the fixing base and that is away from the bearing part, or the magnetic member is embedded inside the fixing base. The magnetic attraction member is located on a surface that is of the bearing part and that faces the fixing base, the magnetic attraction member is in contact with the fixing base to form a friction interface, and the magnetic attraction member is further configured to bear the image sensor. The bearing part includes a circuit board and the magnetic attraction member, and the magnetic attraction member is fastened to a bottom surface of the circuit board to reinforce strength of the circuit board. In this solution, the magnetic member is disposed on the surface that is of the fixing base and that is away from the bearing part, so that distances between the magnetic member, and the image sensor and the drive unit can be maximized. This helps reduce impact of the magnetic member on the drive unit and the image sensor, and ensure moving stability of the image sensor and quality of a generated image signal. The magnetic member is embedded inside the fixing platform, so that the magnetic member and the fixing platform are integrated. This does not affect an overall structure of the image sensor drive module, and facilitates assembly and positioning between the image sensor drive module and another structure of an electronic device.

In a possible implementation, the image sensor drive module includes an elastic member, one end of the elastic member is located at the bearing part, the other end is located at the fixing base, the elastic member forms at least a part of the retention structure, an elastic force applied by the elastic member to the bearing part is at least a part of the retention force, and an elastic force direction is a direction toward the contact surface between the bearing part and the fixing base. The solution provides a specific solution of the retention structure, the stability of the retention force of the retention structure can be improved by disposing the elastic member, and the elastic member and the connecting part may jointly form the retention structure. In other words, the retention force provided by the connecting part and the retention force of the elastic member are utilized, so that the contact between the bearing part and the fixing platform can be more stable.

In a possible implementation, a friction interface is formed at the contact surface between the bearing part and the fixing base, and a friction coefficient of the friction interface is less than 0.3. In this application, the friction coefficient of sliding friction between the bearing part and the fixing base is limited, so that smooth movement of the image sensor can be ensured on a basis of limiting a plane on which the image sensor moves. This reduces friction resistance in the moving process of the image sensor, and improves efficiency of driving the image sensor to move.

In a possible implementation, at a position of the friction interface, the bearing part and/or the fixing base include/includes a super slip material layer, and the super slip material layer is of a solid structure, and that the friction coefficient of the friction interface is less than 0.3 is implemented by using the super slip material layer. A combination of the super slip material layer of the solid structure with the bearing part and the fixing platform is easier to implement, for example, can be directly connected and fastened by using an adhesive layer, and has an advantage of a simple and easy assembly process.

In a possible implementation, at a position of the friction interface, a lubricating layer is disposed between the bearing part and the fixing base, the lubricating layer is of an oil-like, grease-like, or paste-like structure, and that the friction coefficient of the friction interface is less than 0.3 is implemented by using the lubricating layer. In this solution, the lubricating layer of the oil-like, grease-like, or paste-like structure is disposed between the bearing part and the fixing base to implement the friction interface with the low friction coefficient. Because a shape of the lubricating layer is not fixed, the lubricating layer is added at the contact surface between the bearing part and the fixing base, and the lubricating layer may have a small size. This facilitates miniaturization of the camera module in the direction of the optical axis. The design of the lubricating layer further helps ensure flatness of the contact surface, and it may be understood that the flatness can be compensated for by using the lubricating layer, to avoid vibrations in the direction of the optical axis or tilts in the moving process of the image sensor.

In a possible implementation, the lubricating layer may include a rolling structure.

In a possible implementation, that the friction coefficient of the friction interface is less than 0.3 is implemented by performing a surface treatment manufacturing process on the contact surface between the bearing part and the fixing base. A surface treatment manner may be surface modification techniques, such as polishing; surface alloying techniques, such as carburizing and nitriding; surface conversion film (an additive material and a substrate generate, by using a chemical method, a chemical reaction to form a conversion film) techniques; and the like. The surface treatment manner forms a friction interface X without adding the super slip material layer or the lubricating layer, and a small size in the direction of the optical axis can be obtained.

In a possible implementation, the friction interface includes a material having thermal conductivity. In this application, thermal resistance at the position of the friction interface can be reduced, and the heat of the bearing part can be better conducted to one side of the outer surface of the fixing base by using the contact relationship between the bearing part and the fixing part, thereby improving the thermal conducting capability of the image sensor drive module. The heat dissipation efficiency of the image sensor and the drive unit can be optimized, and the deterioration of the imaging quality caused by an excessively high temperature of the camera module in a video shooting process or a long-term shooting process is avoided.

In a possible implementation, a thermal conductivity of the friction interface is greater than 0.5 W/m*K. In this solution, limiting the thermal conductivity of the friction interface helps ensure performance of the image sensor and improve quality of an image signal.

In a possible implementation, a contact manner between the bearing part and the fixing base is contact between planes, a plane that is on the bearing part and that is used to be in contact with the fixing base is a first plane, a plane that is on the fixing base and that is used to be in contact with the bearing part is a second plane, and both the first plane and the second plane are of continuous and complete plane structures. This solution facilitates thermal conduction. A large contact area between the bearing part and the fixing base indicates high thermal conduction efficiency. In this solution, a heat dissipation capability can be improved through contact of complete planes.

In a possible implementation, a contact manner between the bearing part and the fixing base is contact between a plane and arrayed bumps, at a position at which the bearing part is in contact with the fixing base, a structure of one of the bearing part and the fixing base is a complete planar structure, a structure of the other one of the bearing part and the fixing base is an arrayed bump structure, and the arrayed bump structure is disposed in correspondence with all regions of the complete planar structure. In this solution, a problem of a position deviation in the direction of the optical axis caused by flatness of contact between planes can be resolved by the contact between the arrayed bump structure and the plane. Disposing the arrayed bump structure is easy to control flatness of a plane including positions at which bumps are in contact with the plane. In a process of relative movement, it can be more stable and the friction coefficient can be stable.

In a possible implementation, a contact manner between the bearing part and the fixing base is contact between a plane and a plurality of arrayed bumps, at a position at which the bearing part is in contact with the fixing base, a structure of one of the bearing part and the fixing base is a complete planar structure, a structure of the other one of the bearing part and the fixing base is a multi-bump structure, and the multi-bump structure is disposed in correspondence with partial regions of the complete planar structure. In this solution, it helps adjust flatness of the position of the friction interface through cooperation of the bump structure distributed in local positions and the plane. A position of the contact surface between the fixing platform and the bearing part does not require high manufacturing precision of the flatness to meet moving stability of the image sensor.

In a possible implementation, a contact manner between the bearing part and the fixing base is contact between a plane and a protruding rod structure, at a position at which the bearing part is in contact with the fixing base, a structure of one of the bearing part and the fixing base is a complete planar structure, and a structure of the other one of the bearing part and the fixing base is the protruding rod structure. Compared with the bump structure, in this solution, a contact area may be increased by disposing the rod structure. This helps reduce pressure, and avoids affecting positioning precision in the direction of the optical axis due to friction damage of a contact surface in a process of relative movement. Compared with the full-plane contact structure, the rod structure can resolve a problem of movement in the direction of the optical axis caused by the flatness.

In a possible implementation, the movable base is of an integrated circuit board structure, the bearing part includes a first region configured to bear the movable member and another electronic component, a size of the movable base in the direction of the optical axis of the image sensor is a thickness of the movable base, and a thickness of the first region, a thickness of the connecting part, and a thickness of the fixing part are equal. The movable base including the integrated circuit structure can save space of the image sensor drive module in a thickness direction. This facilitates the design of the miniaturization of the size of the image sensor drive module in the direction of the optical axis of the image sensor. In this implementation, the circuit board is formed by using an integrated molding process. A manufacturing process is simple, assembly is convenient, and structure stability is good. Trace layers of the movable base are only routed in a same circuit board. This can ensure stability of signal transmission and reduce signal losses.

In a possible implementation, the bearing part includes a second region configured to fasten the image sensor, the first region is connected between the second region and the connecting part, a thickness of the second region is less than the thickness of the first region, the first region is disposed around edges of the second region to enclose accommodation space together with the second region, the accommodation space is used to accommodate the image sensor, and a contact surface between the first region and the fixing base is coplanar with a contact surface between the second region and the fixing base. In this solution, the bearing part is provided with a groove, and the groove is configured to accommodate the image sensor, so that space in the direction of the optical axis is saved, and the design of the small size in the direction of the optical axis is easily implemented.

In a possible implementation, the fixing base includes the fixing platform and a fixing frame, the retention force is used to maintain contact between the bearing part and the fixing platform, the fixing frame is fixedly connected to an edge of the fixing platform, the fixing frame and the fixing platform enclose enclosed space, the drive unit, the connecting part, and the part of the bearing part are in the enclosed space, and the drive unit is located on a side that is of the bearing part and that is away from the fixing platform. This solution limits a specific location layout of the drive unit. This facilitates the design of the small size of the image sensor drive module.

In a possible implementation, the fixing base includes the fixing platform, the retention force is used to maintain contact between the bearing part and the fixing platform, the drive unit is located between the bearing part and the fixing platform, and the fixing member is fastened to the fixing platform. This solution limits a specific location layout of the drive unit, and the fixing member is fastened by using the fixing platform. This facilitates the design of the small size of the image sensor drive module.

In a possible implementation, the fixing base includes a fixing frame, the fixing frame is fixedly connected to an edge of the fixing platform, the fixing part is connected to the fixing frame, and the fixing part is separated from the fixing platform by at least a part of the fixing frame. This solution provides a specific structure in which the fixing base is connected to the fixing part of the movable base. This facilitates reasonable configuration of a structure layout of the image sensor drive module, and achieves advantages of compactness and a small size of the overall structure.

In a possible implementation, the bearing part includes a first bearing platform and a second bearing platform, the first bearing platform is configured to bear the image sensor, the first bearing platform is in contact with the fixing base to form the contact surface, a direction perpendicular to the contact surface is the direction of the optical axis, the second bearing platform and the connecting part are stacked in the direction of the optical axis, and the movable member of the drive unit is fastened to the second bearing platform.

In a possible implementation, the first bearing platform and the connecting part are connected together to form an integrated structure, and the connecting part is located between the second bearing platform and the contact surface in the direction of the optical axis. In this implementation, the bearing part is designed as a structure of two plates (to be specific , the first bearing platform and the second bearing platform), and a design of a small size of the movable base in a direction perpendicular to the optical axis can be implemented by using an architecture in which the second bearing platform and the connecting part are stacked. When this solution is applied to the electronic device, a board occupation area of a circuit board in which the camera module is located can be reduced.

In a possible implementation, the first bearing platform and the connecting part are respectively connected to a top surface and a bottom surface of the second bearing platform, and the second bearing platform is located between the connecting part and the contact surface in the direction of the optical axis. In this implementation, the bearing part is designed as a structure of two plates (to be specific, the first bearing platform and the second bearing platform), and a design of a small size of the movable base in a direction perpendicular to the optical axis can be implemented by using an architecture in which the second bearing platform and the connecting part are stacked. When this solution is applied to the electronic device, a board occupation area of a circuit board in which the camera module is located can be reduced.

In a possible implementation, the bearing part includes a first plate and a second plate, an outer edge of the first plate and the connecting part are connected together to form an integrated structure, accommodation space is formed by enclosing an inner edge of the first plate, the first plate is configured to bear the movable member, the second plate includes a first part and a second part, the first part and the first plate are stacked, the second part is located at the bottom of the accommodation space, the second part is configured to bear the image sensor, to enable the image sensor to be accommodated in the accommodation space, and the second plate is in contact with the fixing base. In this solution, the second plate is connected to the image sensor, the first plate carries the movable member, and the image sensor is accommodated in the accommodation space. This helps implement a size in the direction of the optical axis, so that a small-size architecture in the direction of the optical axis can be easily implemented for the image sensor drive module.

According to a second aspect not claimed, an embodiment of this application provides an optical assembly, including an axial motion drive module and the image sensor drive module according to any possible implementation of the first aspect. The axial motion drive module is fixedly connected to the image sensor drive module, the image sensor drive module is configured to drive an image sensor to move on a plane perpendicular to an optical axis, and the axial motion drive module is configured to drive a lens assembly to move in an axial direction or tilt.

According to a third aspect not claimed, an embodiment of this application provides a camera module, including an image sensor, a lens assembly, and the optical assembly according to the second aspect. The lens assembly is fastened to an axial motion drive module, the image sensor is fastened to an image sensor drive module, and the lens assembly is located on a light incident side of the image sensor.

According to a fourth aspect, this application provides a camera module according to claim 17, including an image sensor, a lens assembly, and the image sensor drive module according to any possible implementation of the first aspect. The image sensor is fastened to the image sensor drive module, and the lens assembly is located on a light incident side of the image sensor.

According to a fifth aspect, this application provides an electronic device according to claim 18, including a processor and the camera module according to the fourth aspect. The processor is electrically connected to the camera module, and the processor is configured to process an image signal output by an image sensor.

### BRIEF DESCRIPTION OF DRAWINGS

FIG. 1 is a three-dimensional diagram of an electronic device according to a possible implementation of this application;
FIG. 2 is a three-dimensional diagram of the electronic device shown in FIG. 1 in another direction;
FIG. 3A is a three-dimensional diagram of a camera module according to a possible implementation of this application;
FIG. 3B is a three-dimensional sectional view of a camera module according to an implementation of this application;
FIG. 4 is a three-dimensional exploded view of a camera module according to a possible implementation of this application;
FIG. 5 is a three-dimensional exploded view of a camera module according to a possible implementation of this application;
FIG. 6 is a three-dimensional diagram of an image sensor drive module according to a possible implementation of this application;
FIG. 7 is a three-dimensional exploded view of an image sensor drive module according to a possible implementation of this application;
FIG. 8 is a three-dimensional exploded view of an image sensor drive module according to a possible implementation of this application;
FIG. 9 is a cross-sectional view of an image sensor drive module according to a possible implementation of this application;
FIG. 10A is a partial enlarged view of the cross-sectional view of the image sensor drive module shown in FIG. 9;
FIG. 10B is a partial enlarged view of a cross-sectional view of an image sensor drive module according to a possible implementation of this application;
FIG. 11A is a schematic diagram of a friction interface between a bearing part and a fixing platform of an image sensor drive module according to a possible implementation of this application;
FIG. 11B is a schematic diagram of a friction interface between a bearing part and a fixing platform of an image sensor drive module according to a possible implementation of this application;
FIG. 11C is a schematic diagram of a friction interface between a bearing part and a fixing platform of an image sensor drive module according to a possible implementation of this application;
FIG. 12 is a schematic diagram of a friction interface between a bearing part and a fixing platform of an image sensor drive module according to a possible implementation of this application;
FIG. 13 is a schematic diagram of a friction interface between a bearing part and a fixing platform of an image sensor drive module according to a possible implementation of this application;
FIG. 14 is a schematic diagram of a specific form of a contact surface between a bearing part and a fixing platform of an image sensor drive module according to a possible implementation of this application;
FIG. 15 is a schematic diagram of a specific form of a contact surface between a bearing part and a fixing platform of an image sensor drive module according to a possible implementation of this application;
FIG. 16 is a schematic diagram of a specific form of a contact surface between a bearing part and a fixing platform of an image sensor drive module according to a possible implementation of this application;
FIG. 17 is a schematic diagram of a specific form of a contact surface between a bearing part and a fixing platform of an image sensor drive module according to a possible implementation of this application;
FIG. 18 is a schematic diagram of a specific form of a contact surface between a bearing part and a fixing platform of an image sensor drive module according to a possible implementation of this application;
FIG. 19 is a schematic diagram of a specific form of a contact surface between a bearing part and a fixing platform of an image sensor drive module according to a possible implementation of this application;
FIG. 20 is a schematic diagram of a specific architecture of a retention structure of an image sensor drive module according to a possible implementation of this application;
FIG. 21 is a schematic diagram of a specific architecture of a retention structure of an image sensor drive module according to a possible implementation of this application;
FIG. 22 is a schematic diagram of a specific architecture of a retention structure of an image sensor drive module according to a possible implementation of this application;
FIG. 23A is a schematic diagram of a specific architecture of a retention structure of an image sensor drive module according to a possible implementation of this application;
FIG. 23B is a schematic diagram of a specific architecture of a retention structure of an image sensor drive module according to a possible implementation of this application;
FIG. 24 is a schematic diagram of a specific architecture of a retention structure of an image sensor drive module according to a possible implementation of this application;
FIG. 25A is a cross-sectional view of an image sensor drive module according to a possible implementation of this application;
FIG. 25B is the same as an implementation shown in FIG. 25A, and a detailed structure of a first bearing region is shown in FIG. 25B;
FIG. 26 is a cross-sectional view of an image sensor drive module according to a possible implementation of this application;
FIG. 27 is a cross-sectional view of an image sensor drive module according to a possible implementation of this application;
FIG. 28 is a cross-sectional view of an image sensor drive module according to a possible implementation of this application;
FIG. 29 is a cross-sectional view of an image sensor drive module according to a possible implementation of this application;
FIG. 30 is a cross-sectional view of an image sensor drive module according to a possible implementation of this application; and
FIG. 31 is a cross-sectional view of an image sensor drive module according to a possible implementation of this application.

### DESCRIPTION OF EMBODIMENTS

The following describes possible implementations of this application with reference to the accompanying drawings in the possible implementations of this application.

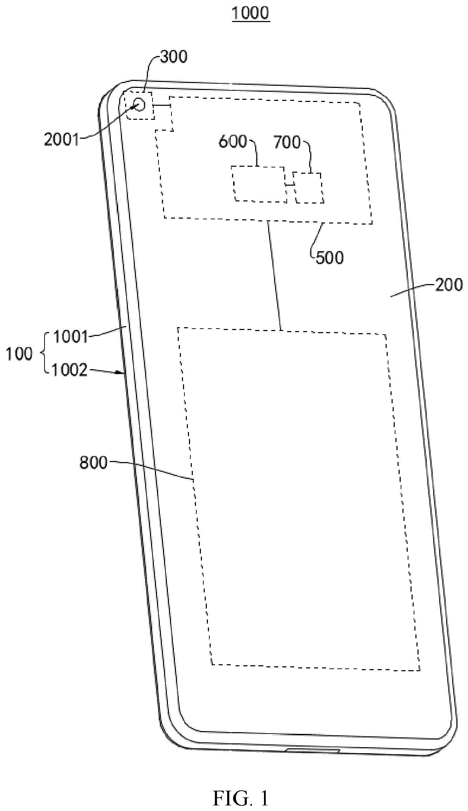

FIG. 1 is a schematic diagram of a structure of an electronic device 1000 in some possible implementations according to a possible implementation of this application. The electronic device may be an electronic product like a mobile phone, a tablet computer, a laptop computer, a television, a vehicle-mounted device, a wearable device, or a video surveillance device. The wearable device may be a smart band, a smart watch, a wireless headset, augmented reality (AR) glasses, an augmented reality technology helmet, virtual reality (VR) technology glasses, a virtual reality technology helmet, or the like. A possible implementation of this application is described by using an example in which the electronic device is the mobile phone.

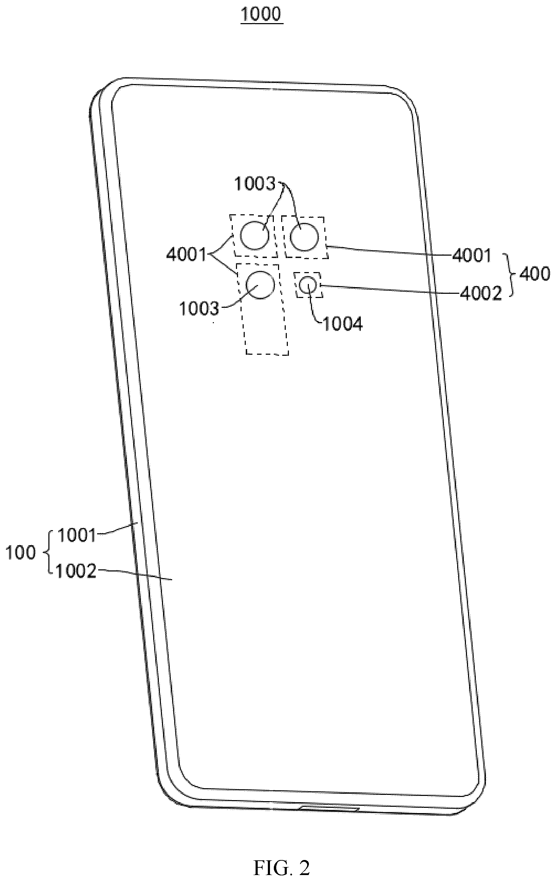

Refer to FIG. 1 and FIG. 2. FIG. 2 is a schematic diagram of a structure of the electronic device 1000 shown in FIG. 1 from another angle. The electronic device 1000 includes a housing 100, a display 200, a front-facing camera assembly 300, a rear-facing camera assembly 400, a mainboard 500, a processor 600, a memory 700, and a battery 800. The display 200 is configured to display an image, and the display 200 may be further integrated with a touch function. The display 200 is mounted on the housing 100. The housing 100 may include a bezel 1001 and a rear cover 1002. The display 200 and the rear cover 1002 are respectively mounted on two sides opposite to each other of the bezel 1001. In this possible implementation, in external space of the electronic device 1000, space facing the display 200 is constituted as the front of the electronic device 1000, and space facing the rear cover 1002 is constituted as the rear of the electronic device 1000.

In some possible implementations, the front-facing camera assembly 300 is located in the housing 100 and is located below the display 200. The display 200 is provided with a front camera hole 2001, and the front-facing camera assembly 300 collects light from the front of the electronic device 1000 through the front camera hole 2001, to implement shooting. The front-facing camera assembly 300 may include a camera module described in the following possible implementations, or may include a camera module of another structure.

In some possible implementations, at least one rear camera hole 1003 is disposed on the rear cover 1002. The rear-facing camera assembly 400 is located in the housing 100. The rear-facing camera assembly 400 collects light from the rear of the electronic device 1000 through the at least one rear camera hole 1003, to implement shooting. In possible implementations of this application, "at least one" includes two cases: "one" and "a plurality of", "a plurality of" means more than two, and "more than two" includes two. The rear-facing camera assembly 400 includes at least one camera module 4001, for example, may include one or more of a standard camera module, a long-focus camera module, a wide-angle camera module, an ultra-long-focus camera module, or an ultra-wide-angle camera module. For example, the rear-facing camera assembly 400 includes a standard camera, a wide-angle camera, and a periscope long-focus camera. The camera module 4001 of the rear-facing camera assembly 400 may include a camera module described in the following possible implementations, or may include a camera module of another structure.

In some possible implementations, the rear-facing camera assembly 400 may further include a flash module 4002. The rear cover 1002 is provided with a flash hole 1004. The flash module 4002 is located in the housing 100, and emits light through the flash hole 1004.

In some possible implementations, the mainboard 500 is located in the housing 100, and the processor 600 and the memory 700 are fastened to the mainboard 500. The display 200, the front-facing camera assembly 300, and the rear-facing camera assembly 400 are coupled to the processor 600. The memory 700 is configured to store computer program code. The computer program code includes computer instructions. The processor 600 is configured to invoke the computer instructions to enable the electronic device 1000 to perform a corresponding operation, for example, enable the display 200 to display a target image, or enable the front-facing camera assembly 300 or the rear-facing camera assembly 400 to collect the target image. A battery 800 is electrically connected to the mainboard 500 and is configured to supply power to the electronic device 1000. In some possible implementations, the electronic device 1000 may further include one or more of functional modules such as an antenna module, a mobile communication module, a sensor module, a motor, a microphone module, and a speaker module. These functional modules may be electrically connected to the processor 600 to transmit a signal.

A possible implementation of this application provides a camera module. The camera module may be the front-facing camera assembly 300 or the rear-facing camera assembly 400 in the implementations shown in FIG. 1 and FIG. 2. The camera module is electrically connected to the processor 600 of the electronic device. Specifically, the processor 600 is electrically connected to an image sensor of the camera module, and may drive the image sensor, or may process an image signal output by the image sensor.

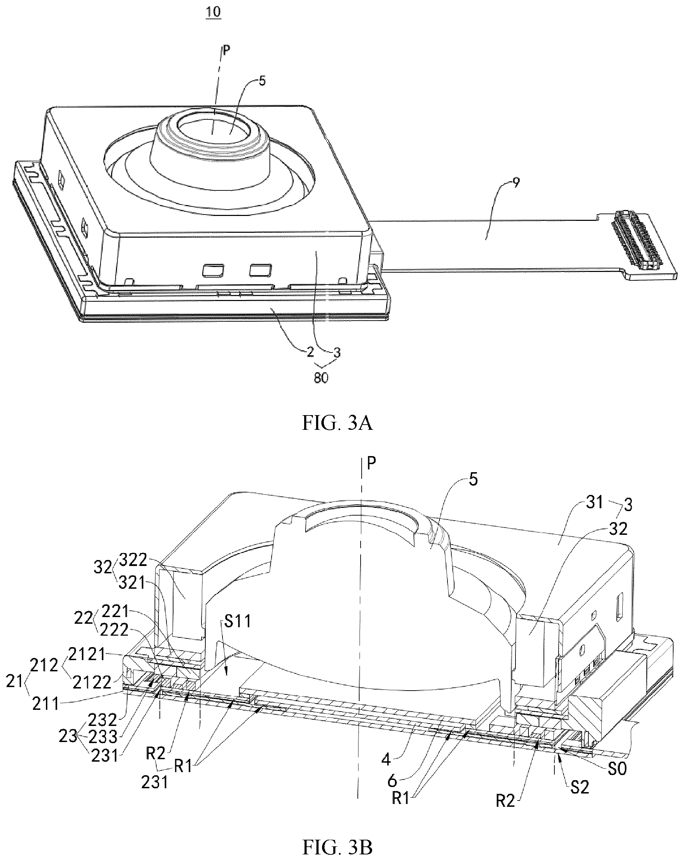

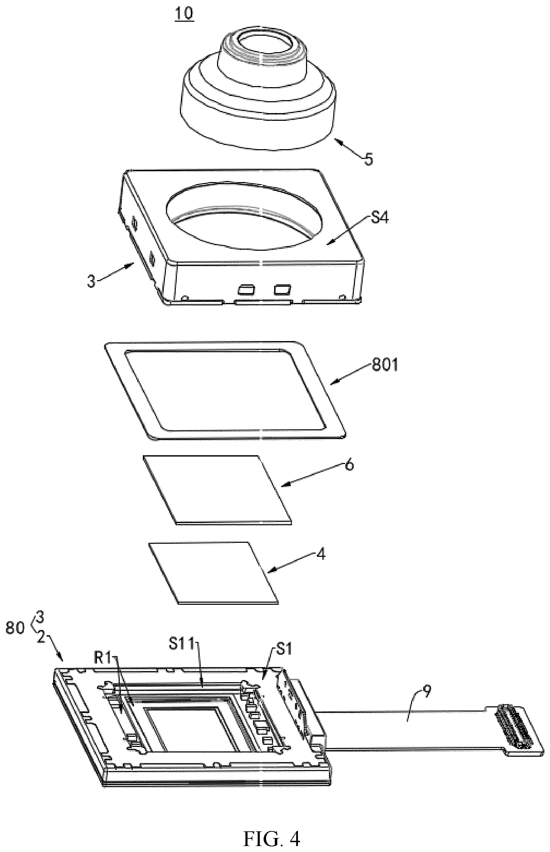

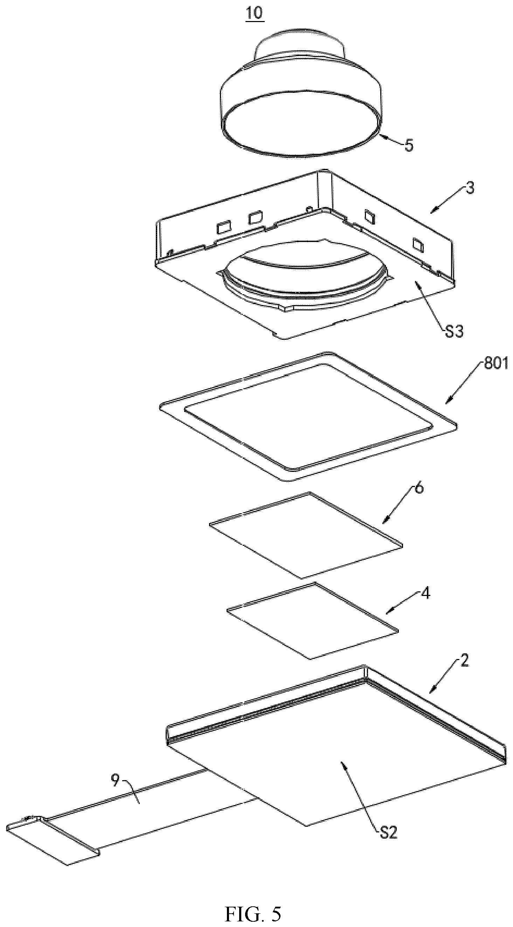

FIG. 3A is a three-dimensional assembly diagram of a camera module 10 according to an implementation of this application. FIG. 3B is a three-dimensional sectional view of the camera module 10 according to an implementation of this application. FIG. 4 and FIG. 5 are three-dimensional exploded views of the camera module 10 provided in FIG. 3A in two directions. Refer to FIG. 3A, FIG. 3B, FIG. 4, and FIG. 5. In an implementation, the camera module 10 includes an image sensor drive module 2, a lens drive module 3, an image sensor 4, and a lens assembly 5. The lens drive module 3 and the image sensor drive module 2 form an optical assembly 80, and the image sensor drive module 2 is configured to drive the image sensor 4 to move. The lens drive module 3 is configured to perform optical focusing, optical image stabilization, aberration adjustment, and the like of the camera module 10.

In an implementation, the image sensor 4 moves on a reference plane. The reference plane may be coplanar with or parallel to a photosensitive plane of the image sensor 4, and the reference plane may be a plane perpendicular to an extension direction of an optical axis P. The optical axis P may be understood as an optical axis of the image sensor 4, may be understood as an optical axis of the lens assembly 5, or may be understood as an optical axis of the camera module 10. In the camera module, theoretically, the optical axis of the lens assembly 5 and the optical axis of the image sensor 4 may overlap. In a case of assembly errors or design tolerances, the optical axis of the lens assembly 5 and the optical axis of the image sensor 4 may be offset or tilted relative to each other. However, regardless of the overlap, the offset, or the tilt, the optical axis of the lens assembly 5 and the optical axis of the image sensor 4 extend in a same direction (the consistent extension direction may be understood as substantially the same direction, where relative tilts within a small range are allowed), and both of which may be considered the optical axis of the camera module 10.

In an implementation, the lens drive module 3 includes a housing 31 and a drive component 32. The housing 31 is enclosed to form accommodation space, and the housing 31 is configured to fixedly connect to another functional module (for example, the image sensor drive module 2). The drive component 32 is accommodated in the accommodation space of the housing 31, and the drive component 32 is configured to drive the lens assembly 5 of the camera module 10 to move. Specifically, the drive component 32 of the drive module 3 is configured to drive the lens assembly 5 to move in an axial direction (to be specific, the extension direction of the optical axis P) or tilt, to implement optical image stabilization, optical focusing, aberration adjustment, and the like. Specifically, the lens drive module 3 may drive the lens assembly 5 to move axially, to implement optical focusing of the camera module 10. The lens drive module 3 may also be configured to compensate for another optical parameter, for example, an aberration, of the camera module 10, and the aberration may be compensated for by the lens drive module 3 driving at least a part of lenses of the lens assembly 5 to move. As shown in FIG. 3B, in an implementation, the drive component 32 includes a magnetic drive member 321 and a coil drive member 322. The coil drive member 322 is connected to the lens assembly 5, and the magnetic drive member 321 is connected to the housing 31. When the coil drive member 322 is powered on, the coil drive member 322 and the magnetic drive member 321 are coupled to generate an electromagnetic driving force to drive the lens assembly 5 to move. In a specific implementation of this application, the drive component 32 of the lens drive module 3 is shielded by the housing 31, and the drive component 32 of the lens drive module 3 does not participate in driving the image sensor drive module 2.

In this solution, the lens drive module 3 and the image sensor drive module 2 that are of the optical assembly 80 are of two independent modular structures, and the image sensor drive module 2 may match different types of lens drive modules 3 to form different drive solutions. The image sensor drive module 2 provided in this application can form a plurality of different optical image stabilization solutions, and has wide adaptability. In an assembly process of an implementation, the image sensor 4 may be first fastened to the image sensor drive module 2, and then the lens drive module 3 is fastened to a top surface of the image sensor drive module 2. Specifically, the lens drive module 3 and the image sensor drive module 2 may be fixedly connected by using adhesive (an adhesive layer 801). In an assembly process of another implementation, the lens drive module 3 and the image sensor drive module 2 may be fixedly connected as a whole to form the optical assembly 80, and then the image sensor 4 is mounted to the optical assembly 80. In other words, the optical assembly 80 may be of a modular structure independent of the image sensor 4 and the lens assembly 5, assembly precision of the modular structure is easily controlled, and manufacturing costs are low. An assembly process can be simplified in a process of assembling the optical assembly 80 with the image sensor 4 and the lens assembly 5. In addition, positioning precision of the assembled optical components is high. This helps ensure optical stability of the camera module.

The camera module 10 includes a circuit board 9 configured to electrically connect to a processor of a mainboard of an electronic device. The circuit board 9 may be a flexible circuit board. The circuit board 9 may be a part of the image sensor drive module 2. The circuit board 9 is configured to transmit, to the processor, a signal collected by the image sensor 4. A drive circuit may be further disposed on the circuit board 9, and the drive circuit is configured to drive the image sensor drive module 2 to move the image sensor 4.

Refer to FIG. 4 and FIG. 5. In a specific implementation, the image sensor drive module 2 includes a first top surface S1 and a first bottom surface S2 that are oppositely disposed. The first bottom surface S2 is planar and is configured to connect to the mainboard or a middle frame support of the electronic device. The first top surface S1 is of a frame-shaped architecture. The image sensor drive module 2 includes a first bearing region R1, the first bearing region R1 is located inside an opening S11 formed by enclosing the first top surface S1, and the image sensor 4 is mounted in the first bearing region R1 from the opening S11. An optical component 6, for example, an IR filter, may be further mounted in the first bearing region R1. The lens drive module 3 is of an entire frame-shaped architecture. A region enclosed by the lens drive module 3 is located on a light incident side of the first bearing region R1 of the image sensor drive module 2, in other words, is directly opposite to the first bearing region R1 in a direction of an optical axis. The opening S11 is connected to the first bearing region R1 and the region enclosed by the lens drive module 3, and the region enclosed by the lens drive module 3 is configured to mount the lens assembly 5. In an implementation, a part of the lens assembly 5 may be located inside the opening S11. In an implementation, a part of the lens assembly 5 may alternatively put into the first bearing region R1. The lens drive module 3 includes a second bottom surface S3 and a second top surface S4 that are oppositely disposed. The second bottom surface S3 is an outer surface of a bottom plate of the housing 31, and the second top surface S4 is an outer surface of a top plate of the housing 31. The second bottom surface S3 may be adhered and fastened to the first top surface S1 by using the adhesive layer 801, and the second bottom surface S3 may alternatively be fastened to the first top surface S1 in another connection manner, for example, screw fixing or welding.

In another implementation provided in this application, the lens drive module may not be disposed in the camera module 10. A position of the image sensor 4 is adjusted only by using the image sensor drive module 2 to implement functions such as image stabilization or aberration compensation of the camera module 10. The miniaturized camera module 10 with a simple structure is provided and is used in a specific electronic device. This helps save space of the electronic device and reduce a board occupation area of the electronic device.

As shown in FIG. 3B, the image sensor drive module 2 provided in an implementation of this application includes a fixing base 21, a drive unit 22, and a movable base 23. The drive unit 22 includes a fixing member 221 and a movable member 222 that can move relative to each other. For example, the fixing member 221 is a magnet, and the movable member 222 is a coil. The movable member 222 interacts with the fixing member 221 to generate a driving force when the movable member 222 is powered on. The fixing base 21 is configured to bear the fixing member 221, and the movable base 23 is configured to bear the movable member 222 and the image sensor 4. The fixing base 21 includes a fixing platform 211 and a fixing frame 212. The fixing platform 211 includes an inner surface S0 and the first bottom surface S2 that are opposite to each other, the fixing frame 212 is connected to the fixing platform 211 and protrudes from the inner surface S0, the fixing member 221 is fastened to the fixing base 21, and the opening S11 is formed on a side that is of the fixing frame 212 and that is away from the inner surface. The movable base 23 and the inner surface S0 of the fixing platform 211 may be in contact. The movable base 23 includes a bearing part 231, a fixing part 232, and a connecting part 233. The connecting part 233 is configured to implement mechanical and electrical connection between the bearing part 231 and the fixing part 232, the fixing part 232 is connected to the fixing base 21, and the fixing part 232 is relatively fixedly connected to the fixing base 21. The bearing part 231 includes a second bearing region R2 and the first bearing region R1. The second bearing region R2 is located on a periphery of the first bearing region R1, the second bearing region R2 is configured to bear the movable member 222, the first bearing region R1 is configured to bear the image sensor 4, and the opening S11 is configured to mount the image sensor 4 to the first bearing region R1.

In this application, the image sensor drive module 2 is designed as a module architecture independent of the image sensor 4. After the image sensor drive module 2 is assembled as a whole, the image sensor 4 is assembled to the image sensor drive module 2 through the opening S11 of the image sensor drive module 2. In this application, the image sensor drive module 2 is decoupled from the image sensor 4. This helps control manufacturing precision of the image sensor drive module 2. Because the image sensor 4 is not assembled in the image sensor drive module 2 in manufacturing and assembly processes of the image sensor drive module 2, the manufacturing process of the image sensor drive module 2 has no impact on performance of the image sensor 4, and a test process of the image sensor drive module 2 may alternatively use a separate image sensor dedicated for testing. When the image sensor drive module 2 is used in the camera module, high-quality performance of the image sensor 4 of the camera module can be ensured, manufacturing yield of the camera module can be improved, and costs can be reduced.

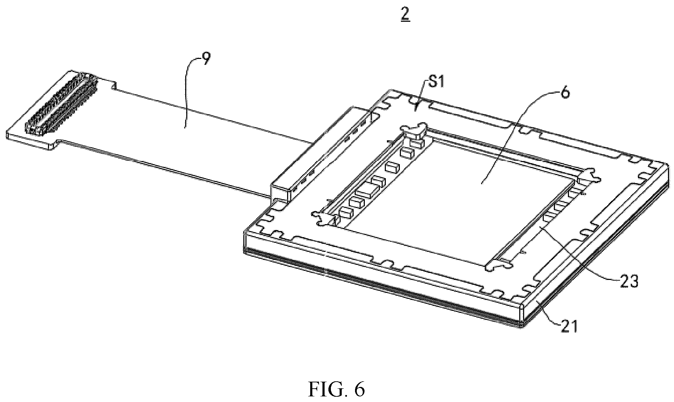

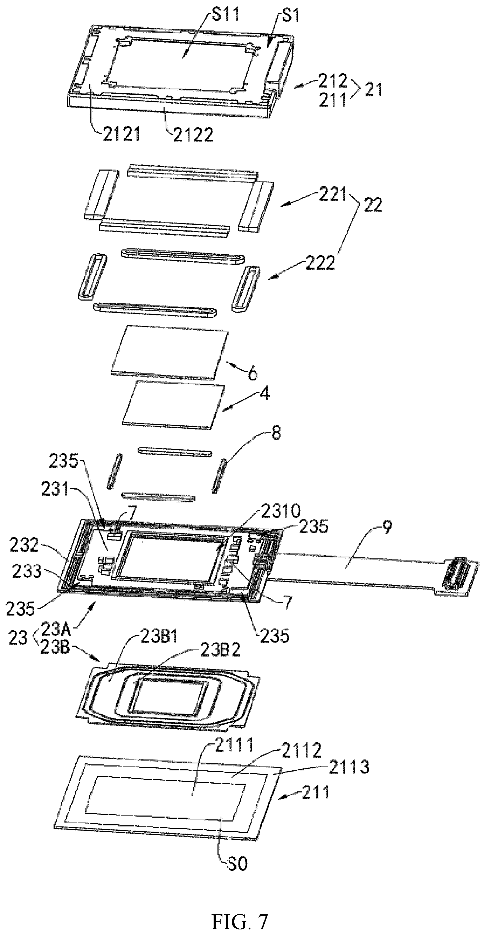

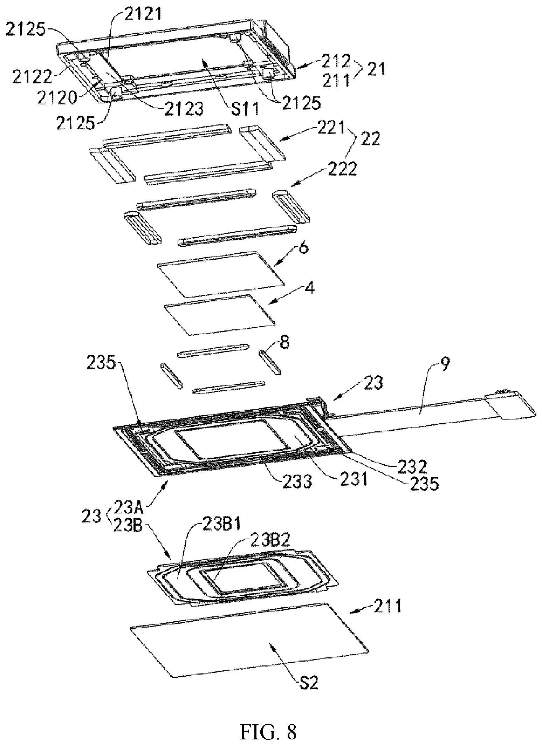

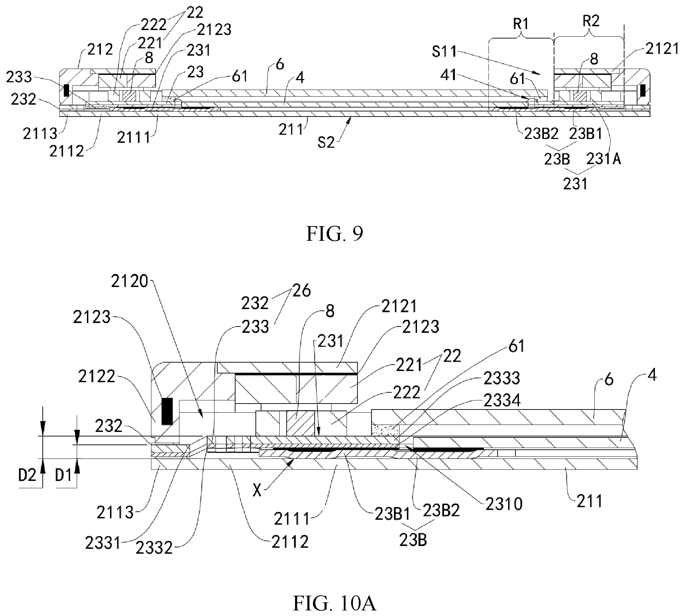

A detailed structure of a specific image sensor drive module provided in this application is described as follows. FIG. 6 is a three-dimensional assembly diagram of the image sensor drive module 2 according to an implementation of this application. FIG. 7 and FIG. 8 are three-dimensional exploded views of the image sensor drive module 2 in two directions according to FIG. 6. FIG. 9 is a cross-sectional view of the image sensor drive module 2 according to FIG. 6. As shown in FIG. 9, in this implementation, the fixing base 21 is equivalent to a housing of the image sensor drive module 2. The fixing frame 212 of the fixing base 21 includes a side frame 2122 and a top plate 2121, and the top plate 2121 and the inner surface S0 of the fixing platform 211 are oppositely disposed. The side frame 2122 is connected between the top plate 2121 and the fixing platform 211, and forms enclosed space 2120 with the top plate 2121 and the fixing platform 211. The drive unit 22, the connecting part 233, and the second bearing region R2 are located in the enclosed space 2120. The opening S11 is formed by enclosing the top plate 2121.

The drive unit in FIG. 6 is inside the fixing base 21, and cannot be seen because the drive unit is blocked by the fixing base 21. The fixing base 21 may be used as a mounting carrier, and can also protect the drive unit 22 and the movable base 23. In addition, the fixing base 21 may also be used as a structure that connects the image sensor drive module 2 to another apparatus. For example, the image sensor drive module 2 may be mounted on a circuit board of an electronic device by fixedly connecting the fixing base 21 to the circuit board.

Refer to FIG. 7, FIG. 8, and FIG. 9. In an implementation, the fixing platform 211 is of a flat-plate structure, and the fixing platform 211 is configured to be in contact with a part of the movable base 23. The inner surface of the fixing platform 211 may be of a flat-plate structure, the inner surface of the fixing platform 211 may be perpendicular to a direction of the optical axis of the image sensor 4, the inner surface of the fixing platform 211 may be parallel to a photosensitive surface of the image sensor 4, and the outer surface of the fixing platform 211 is the first bottom surface S2 (as shown in FIG. 5) of the image sensor drive module 2. In an implementation, the fixing platform 211 is made of a metal material, or the fixing platform 211 has a magnetic conductive material. The fixing platform 211 can be attracted by a magnetic attraction force of a magnetic component. The fixing platform 211 is configured to be in contact with a partial structure that is of the movable base 23 and that drives the image sensor 4 to move, and the movable base 23 drives the image sensor 4 to move on the fixing platform 211. In the moving process, a contact surface between the fixing platform 211 and the movable base 23 maintains in contact. The fixing platform 211 has a thermal conducting material, and may be used as a heat dissipation structure to dissipate heat generated by the image sensor and another electronic component that are of the movable base 23.

Specifically, the fixing platform 211 includes a central region 2111, a connection region 2112, and an edge region 2113. The central region 2111, the connection region 2112, and the edge region 2113 are coplanar. The connection region 2112 is disposed around a periphery of the central region 2111 and is connected between the edge region 2113 and the central region 2111. As shown in FIG. 7, the fixing platform 211 may be of an integrated flat-plate structure. A dotted box schematically represents separation between the central region 2111, the connection region 2112, and the edge region 2113. Specifically, the separation between the three parts needs to be defined based on functions of the three parts. Detailed description is as follows: The central region 2111 is configured to be in contact with a partial region of the movable base 23. In an implementation, a partial structure that is of the movable base 23 and that carries the image sensor 4 is frame-shaped (or ring-shaped), a partial area of the central region 2111 is in contact with the movable base 23, a partial area of the central region 2111 and the image sensor 4 are oppositely disposed, and there is a gap between the central region 2111 and the image sensor 4. The edge region 2113 is configured to connect to the fixing frame 212.

In an implementation, the fixing frame 212 includes the top plate 2121 and the side frame 2122. The top plate 2121 is of a rectangular frame structure, and the opening S11 formed by enclosing the top plate 2121 is configured to mount or accommodate an optical component (for example, an optical lens) or is used as a light transmission hole. An outer contour of the opening S11 formed by enclosing the top plate 2121 is larger in size than an outer contour of the image sensor. This helps mount the image sensor to the movable base 23 through a position of the opening S11.

The side frame 2122 is connected to an outer edge of the top plate 2121, and the side frame 2122 and the top plate 2121 are enclosed together to form the enclosed space 2120. In this implementation, the fixing member 221 of the drive unit 22 is fastened inside the top plate 2121 and is located in the enclosed space 2120. In this implementation, the fixing member 221 is a magnetic drive member, the fixing member 221 includes four stripe-shaped magnets, and the four stripe-shaped magnets are oppositely disposed in pairs. The top plate 2121 includes four frames, and one stripe-shaped magnet is mounted on each frame.

In an implementation, a magnetic conductive structure 2123 is disposed in the fixing frame 212. In the implementation shown in FIG. 7, the magnetic conductive structure 2123 is disposed on an inner surface of the top plate 2121. In another implementation, the magnetic conductive structure 2123 may alternatively be disposed on an outer surface of the top plate 2121, or may alternatively be embedded at a middle layer of the top plate 2121. The fixing member 221 is mounted on an inner side of the magnetic conductive structure 2123, and the magnetic conductive structure 2123 is configured to implement magnetic shielding of the image sensor drive module 2. The magnetic conductive structure 2123 is made of a material having magnetic shielding performance. A form of the magnetic conductive structure 2123 may be the same as that of the top plate 2121. The magnetic conductive structure 2123 may alternatively be disposed on both the top plate 2121 and the side frame 2122. In other words, the magnetic conductive structure 2123 forms an architecture of the enclosed space 2120, and all-round shields a magnetic environment inside the image sensor drive module 2. In an implementation, the magnetic conductive structure 2123 may be a plate-shaped structure, for example, a metal plate, and the metal plate may be fastened to the inner surface of the top plate 2121. In another implementation, the magnetic conductive structure 2123 may alternatively be a layer structure coated on the surface of the top plate, for example, a coating that has a magnetic conductive function and that is formed on the surface of the top plate 2121 through spraying, electroplating, or the like. The magnetic conductive structure 2123 may alternatively be a mesh structure, and has an electromagnetic shielding function, or may have a grounding function. In this application, the magnetic conductive structure 2123 is disposed in the fixing frame 212, so that magnetic shielding of the image sensor drive module 2 can be implemented. When the drive unit 22 of the image sensor drive module 2 is magnetically driven, the magnetic conductive structure 2123 can ensure stability of a drive signal of the drive unit 22, thereby improving moving stability of the image sensor 4. In addition, the magnetic conductive structure 2123 is grounded to protect an electronic component of the image sensor drive module 2, for example, to prevent static electricity from damaging the electronic component.

In an implementation, the fixing frame 212 may be of an integrated structure. The top plate 2121, the side frame 2122, and the magnetic conductive structure 2123 are made into the integrated structure by using a dual-material injection molding process.

As shown in FIG. 8, positioning structures 2125 protruding from the inner surface of the top plate 2121 of the fixing frame 212 are disposed. The positioning structures 2125 protrude from the inner surface of the top plate 2121 to the enclosed space 2120. The positioning structures 2125 are cylindrical, and the top plate 2121 is of a rectangular structure. A quantity of the positioning structures 2125 is four, and are distributed at the four corners of the top plate 2121. The positioning structures 2125 are configured to cooperate with corresponding hole structures of the movable base 23 to implement assembly and positioning between the fixing base 21 and the movable base 23. Precise alignment between the movable member 222 and the fixing member 221 that are of the drive unit 22 can be implemented in the assembly process through cooperation between the positioning structures 2125 and the hole structures of the movable base 23.

As a power source of the image sensor drive module, the drive unit 22 is configured to generate a driving force, and the driving force can drive the movable base 23 to move relative to the fixing base 21. In an implementation, the drive unit 22 is a motor of a magnetic structure, for example, a VCM (voice coil motor), and the fixing member 221 and the movable member 222 are a magnetic drive member and a coil drive member respectively. In the implementation shown in FIG. 7, the fixing member 221 is the magnetic drive member, and the movable member 222 is the coil drive member. In another specific solution, the fixing member 221 is the coil drive member, and the movable member 222 is the magnetic drive member. In another implementation, the drive unit 22 may alternatively be another type of driver, for example, an SMA (shape memory alloy) motor or a PIEZO (piezo motor) motor. In this embodiment of this application, the movable member 222 and the fixing member 221 that are of the drive unit 22 may be two components (for example, a coil and a magnet that are of the motor of a magnetic structure) that are independent of each other. In a powered-on state, a driving force is generated to drive the image sensor to move. The movable member 222 and the fixing member 221 that are of the drive unit 22 in this embodiment of this application may alternatively be of an integrated structure, for example, the shape memory alloy motor, and may be driven by changing a size of a material through power heating.

In an implementation, no electrical connection part or electronic component is disposed on the fixing base 21, and all circuit routing, electronic components, and components that need to be powered on in the camera module 10 are disposed on the movable base 23. The movable base 23 is equivalent to a mainboard (or a circuit board structure) of the camera module 10 and is configured to bear all components that need to be powered on or that need to transmit signals. This solution facilitates a design of miniaturization of the camera module 10, optimizes a signal transmission path, and improves signal stability. In particular, when the movable base 23 is of an integrated circuit board structure, routing for transmitting a signal or current only needs to be arranged in the integrated circuit board, and the signal or current does not need to be transmitted between different circuit boards or FPCs. This signal and current transmission process can ensure the signal stability and reduce signal losses. In addition, it is easy to isolate signals to prevent mutual interference of the signals from affecting quality of an image signal.

Refer to FIG. 7, FIG. 8, and FIG. 9. In an implementation, the movable base 23 includes the bearing part 231, the fixing part 232, and the connecting part 233. The connecting part 233 is configured to implement mechanical and electrical connection between the bearing part 231 and the fixing part 232. The mechanical connection is a connection relationship in a structure form, and may include direct connection or indirect connection. The direct connection may also be of an integrated architecture. For example, two parts of the integrated circuit board structure may be understood as the direct connection. The indirect connection is performing connection by using another connection structure, for example, connecting two plate structures by using solder balls. The electrical connection is connection of signal routing. An image signal, an electrical signal, or another signal may be transmitted by using the electrical connection relationship. For example, electrical connection is performed by using routing of a circuit board, or electrical connection is performed by using an FPC. The fixing part 232 is connected to the fixing base 21. Specifically, the fixing part 232 may be connected between the fixing platform 211 and the fixing frame 212. In another implementation, the fixing part 232 may alternatively be connected to the fixing frame 212, and the fixing part 232 and the fixing platform 211 are separated by at least a part of the fixing frame 212.

The movable base 23 is provided with hole structures 235. The hole structures 235 are distributed at corners of the movable base 23, and the hole structures 235 are configured to cooperate with the positioning structures 2125 of the fixing base 21 to implement positioning of the assembly process between the movable base 23 and the fixing base 21. This ensures positioning accuracy between the fixing member 221 and the movable member 222 that are of the drive unit 22. The hole structures 235 are distributed between the bearing part 231 and the connecting part 233, and are located outside the four corners of the bearing part 231.

The movable member 222 of the drive unit 22 is disposed on the bearing part 231. The bearing part 231 is further configured to assemble the image sensor 4. Specifically, after the image sensor drive module 2 is assembled, the image sensor 4 is placed on the bearing part 231 from the opening S11 by using an assembly device, for example, a surface-mount machine. In the assembly process, the image sensor 4 is fastened and electrically connected to the bearing part 231. The image sensor 4 may be fastened to the bearing part 231 by using adhesive, and then traces of the image sensor 4 and the bearing part 231 are electrically connected by using a gold wire. In another implementation, the image sensor 4 may alternatively be directly connected to a solder pad of the bearing part 231 by using solder balls, and traces of the image sensor 4 and the bearing part 231 are implemented by using the solder balls and the solder pad.

Specifically, refer to FIG. 7, FIG. 8, FIG. 9, and FIG. 10A. The fixing part 232 of the movable base 23 is assembled between the edge region 2113 of the fixing platform 211 and the side frame 2122 of the fixing frame 212. An outer edge of the fixing part 232 is connected to the circuit board 9, the circuit board 9 and the fixing part 232 may be of an integrated structure, and the circuit board 9 may alternatively be connected to the fixing part 232 through plug-in. Specifically, a male connector may be disposed on the fixing part 232, and a female connector may be disposed on the circuit board 9. Electrical signal transmission is implemented through cooperation between the male connector and the female connector. The circuit board 9 is configured to electrically connect to a processor of an electronic device to transmit a signal of the image sensor 4 to the processor. The bearing part 231 and the fixing platform 211 are stacked, a central region of the bearing part 231 encloses accommodation space 2310, and the accommodation space 2310 is used to accommodate the image sensor 4. In another implementation, the accommodation space 2310 may alternatively be used to accommodate another optical component 6 (for example, an optical filter or a lens), or used as a light-passing passage (this means, no optical component is placed, but the accommodation space 2310 is located on a light incident side of the image sensor 4). As shown in FIG. 7, electronic devices 7 are disposed on a surface that is of the bearing part 231 and that is away from the fixing platform 211, and the electronic devices 7 are distributed on opposite sides of the accommodation space 2310 on the bearing part 231. To ensure structure symmetry of the movable base 23, the electronic devices 7 may be symmetrically distributed on the both sides of the accommodation space 2310. This helps to ensure a stable moving process of the movable base 23. In an implementation, the electronic devices 7 and the movable member 222 of the drive unit 22 are mounted on a same surface of the bearing part 231, specifically , are mounted on a surface that is of the bearing part 231 and that faces the top plate 2121 of the fixing frame 212. In this way, the electronic devices 7 and the movable member 222 that are on the bearing part 231 are all accommodated in the enclosed space 2120 of the fixing frame 212 (as shown in FIG. 8 and FIG. 10A).

As shown in FIG. 9, the movable member 222 is fastened to a side that is of the second bearing region R2 of the bearing part 231 and that faces away from the fixing platform 211, and the movable member 222 faces the top plate 2121. Specifically, in this implementation, the movable member 222 of the drive unit 22 is the coil drive member. The movable member 222 includes four coils oppositely disposed in pairs, all the coils are disposed in a one-to-one correspondence with the four magnets fastened to the top plate 2121, and the coils are disposed on the bearing part 231. Circuit routing is disposed in the bearing part 231, so that power supply traces of the coils are easily routed. In an implementation, refer to FIG. 7, FIG. 8, FIG. 9, and FIG. 10A. Support structures 8 are disposed on the bearing part 231, and the movable member 222 encloses the support structures 8. To be specific, the support structure 8 is disposed in each coil, and the support structure 8 that is a rigid structure and that protrudes from a surface of the bearing part 231 is disposed. It may be understood that the coils are disposed around the support structures 8, and the support structures 8 can protect the coils from scratching by another structure.

In this application, the drive unit 22 drives the bearing part 231 to move, and a position of the fixing part 232 maintains unchanged. In this way, in the moving process of the bearing part 231, the connecting part 233 is elastically deformed, and the connecting part 233 is connected between the fixing part 232 and the bearing part 231. In terms of the mechanical connection, the connecting part 233 is equivalent to a structure of a spring or a spring plate, and circuit board routing for transmitting a signal and a current is also disposed on the connecting part 233. Electrical connection between the bearing part 231 and the fixing part 232 is implemented through circuit board routing. In other words, a signal of the image sensor 4 can be transmitted to the outside of the image sensor drive module 2. The connecting part 233 is of a thin stripe-shaped spring arm structure connected between the fixing part 232 and the bearing part 231. Specifically, a plurality of stripe-shaped spring arms, in other words , the connecting part 233, are formed by removing a material from the movable base 23. The connecting part 233 is elastically deformable due to a form of the material. The connecting part 233 may be elastically deformed when the bearing part 231 is driven to move relative to the fixing part 232 by the driving force of the drive unit 22, and mechanical and electrical connection between the fixing part 232 and the bearing part 231 are maintained. In an implementation of this application, the drive unit 22 can drive the image sensor 4 to move in an X-axis direction and a Y-axis direction. Both the X-axis direction and the Y-axis direction are perpendicular to the direction of the optical axis of the image sensor 4, and the direction of the optical axis is considered as a Z-axis. The X-axis direction, the Y-axis direction, and the direction of the optical axis may form a three-axis rectangular coordinate system. To be specific, the drive unit 22 drives the image sensor 4 to move on a plane perpendicular to the optical axis and in the X-axis direction and the Y-axis direction that are perpendicular to each other. In the moving process of the bearing part 231, the connecting part 233 is elastically deformed to ensure that the bearing part 231 can move relative to the fixing part 232.

**In** an implementation, the movable base 23 may be of an elastic circuit board structure, the bearing part 231 and the fixing part 232 are not elastic, and the connecting part 233 is elastic.

FIG. 10A is a partial enlarged schematic diagram of FIG. 9. The connecting part 233 includes a conductor layer 2333 and a metal layer 2334. The conductor layer 2333 is configured to set the circuit board routing, and implement electrical connection between the bearing part 231 and the fixing part 232. The metal layer 2334 may be of a metal flexural structure. The metal layer 2334 is configured to provide elastic deformation of the connecting part 233. Existence of the metal layer 2334 ensures flexibility and strength of the connecting part 233, thereby improving an elastic deformation capability of the connecting part 233. The conductor layer 2333 and the metal layer 2334 may be isolated by using an insulation layer (the insulation layer is omitted in FIG. 10A), and the insulation layer may be specifically a polyamide insulating material.

Refer to FIG. 7, FIG. 8, FIG. 9, and FIG. 10A. The movable base 23 includes an integrated circuit board structure 23A and a reinforcing plate structure 23B. The integrated circuit board structure 23A includes the fixing part 232, the connecting part 233, and a part of the bearing part (referred to as a first plate 231A). In addition, the integrated circuit board structure 23A is a structure integrally formed by using a circuit board manufacturing process, and the conductor layer 2333 and the metal layer 2334 are disposed in the structure. The metal layer 2334 is configured to ensure the strength and the elastic deformation capability of the connecting part 233. The reinforcing plate structure 23B is a part of the bearing part (referred to as a second plate), and the reinforcing plate structure 23B is connected to a bottom surface of the part of the bearing part (first plate 231A) of the integrated circuit board structure 23A.

The reinforcing plate structure 23B is configured to: be in contact with the fixing platform 211, form a friction interface X, and conduct and dissipate heat. In general, in this implementation, the bearing part 231 includes the first plate 23lA and the second plate (reinforcing plate structure 23B), an outer edge of the first plate 231Aand the connecting part 233 are connected together to form an integrated structure, the accommodation space 2310 is formed by enclosing an inner edge of the first plate 231A, the first plate 231A is configured to bear the movable member 222, the second plate (reinforcing plate structure 23B) includes a first part 23B1 and a second part 23B2, the first part 23B1 and the first plate 231A are stacked, the second part 23B2 is located at the bottom of the accommodation space 2310, the second part 23B2 is configured to bear the image sensor 4, to enable the image sensor 4 to be accommodated in the accommodation space 2310, and the second plate (reinforcing plate structure 23B) is in contact with the fixing platform 211 of the fixing base 21. The first part 23B1 of the second plate (reinforcing plate structure 23B) is connected to the first plate 231A by using an adhesive layer, the first part 23B1 and the first plate 231A are stacked, the second part 23B2 is located in the accommodation space and the second part 23B2 is connected to the image sensor 4 by using the adhesive layer. As shown in FIG. 9, the image sensor 4 is electrically connected to the first plate 231A through a signal wire 41 (for example, a gold wire). An adhesive structure 61 is disposed at a position of the signal wire 41, and the adhesive structure 61 is configured to fasten the optical component 6, for example, an IR optical filter. On one hand, the adhesive structure 61 may be fixedly connected to the optical component 6, and on the other hand, the adhesive structure 61 may also fasten the signal wire 41, to ensure stable and reliable electrical connection between the image sensor 4 and the conductor layer 2333 of the bearing part 231. In this solution, a signal of the image sensor is transmitted by using the first plate, the connecting part, and the fixing part.

In the direction of the optical axis, a part that is of the second plate (reinforcing plate structure 23B) and that is directly opposite to the opening S11, and a part that is of the first plate 231A and that is directly opposite to the opening S11 together form the first bearing region R1 of the bearing part 231 (a part marked R1 between two dashed lines in FIG. 9 represents the first bearing region R1 of the bearing part 231). A part that is of the first plate 231A and that is directly opposite to the top plate 2121 is the second bearing region R2 of the bearing part 231 (a part marked R2 between two dashed lines in FIG. 9 represents the second bearing region R2 of the bearing part 231). The opening S11 of the image sensor drive module 2 provided in this solution is directly opposite to the first bearing region R1. In a process of assembling the image sensor 4, the image sensor 4 is fastened directly by using a suction force of a suction cup, and the suction cup is moved in the direction of the optical axis. The image sensor 4 is placed in the first bearing region R1, and the image sensor 4 is fixedly connected to the bearing part 231. In another implementation, the opening S11 and the first bearing region R1 may alternatively be staggered. It may be understood that a partial region of the first bearing region R1 is directly opposite to the opening S11, and a part of the first bearing region R1 is not directly opposite to the opening S11. In this implementation, in the process of assembling the image sensor, the image sensor may be fastened by using the suction cup, the image sensor is placed in a region corresponding to the opening S11 in the direction of the optical axis, and the suction cup is moved in a direction perpendicular to the direction of the optical axis, to transport the image sensor to the first bearing region.

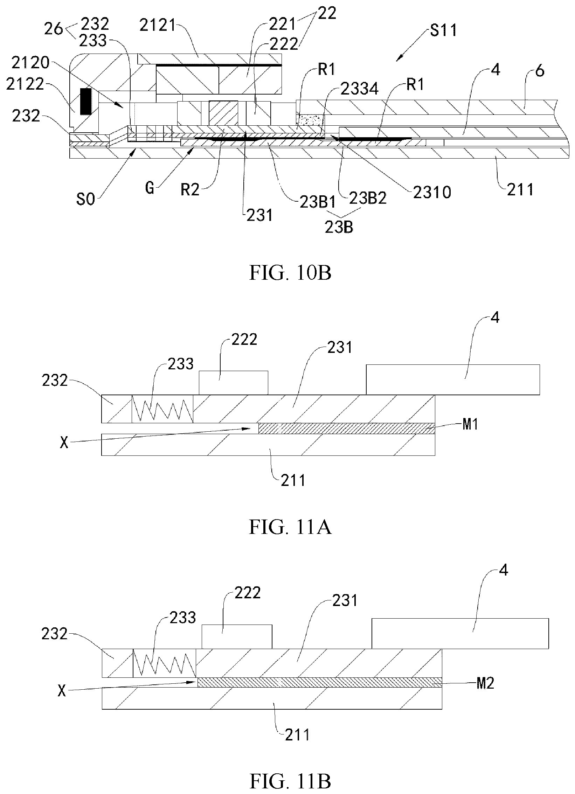

FIG. 10B is a partial enlarged view of a cross-sectional view of an image sensor drive module according to a possible implementation of this application. Refer to FIG. 10B. There is a gap G between the movable base 23 and the inner surface S0 of the fixing platform 211. It may be understood that the movable base 23 and the inner surface S0 of the fixing platform 211 are spaced in a floating manner.

Refer to FIG. 9 and FIG. 10A. The bearing part 231 is in contact with the fixing platform 211 of the fixing base 21, and the friction interface X is formed at a contact position between the bearing part 231 and the fixing platform 211 of the fixing base 21. A friction coefficient of the friction interface X is less than 0.3. The friction interface X may be a contact surface between the bearing part 231 and the fixing base 21 (in other words, the friction interface is in a form of one surface). The friction interface X may alternatively be a medium between the bearing part 231 and the fixing base 21, for example, lubricating oil (in other words, the friction interface is in a form of grease or paste). The friction interface X may alternatively be a layer structure between the bearing part 231 and the fixing base 21. For example, a super slip material layer is disposed between the bearing part 231 and the fixing base 21 to form the friction interface X (in other words, the friction interface is formed by a three-dimensional layer structure). In general, the bearing part 231 and the fixing platform 211 are in a sliding friction relationship, and a low friction coefficient may be obtained at the friction interface X through surface treatment, or by disposing a solid structure layer or a grease or paste-like lubricating layer. In a possible implementation, the lubricating layer may include a rolling structure. In this application, the friction coefficient of sliding friction between the bearing part 231 and the fixing platform 211 is limited, so that smooth movement of the image sensor 4 can be ensured on a basis of limiting a plane on which the image sensor 4 moves. This reduces friction resistance in the moving process of the image sensor 4, and improves efficiency of driving the image sensor 4 to move.

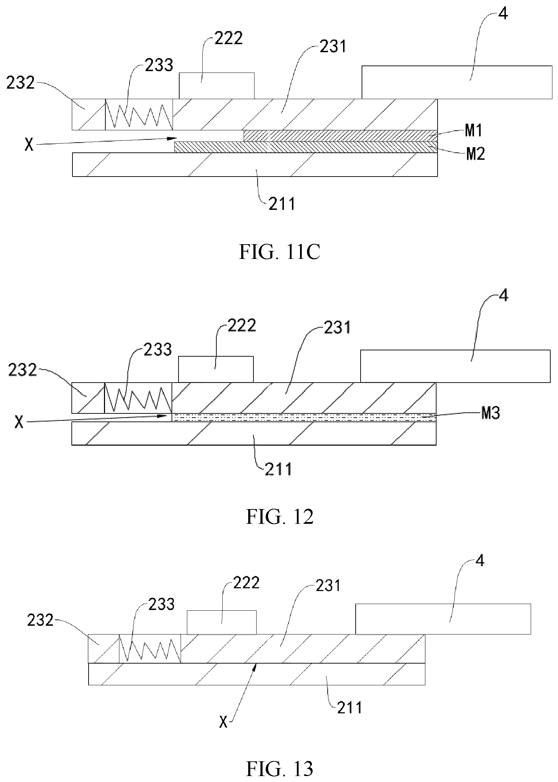

In an implementation, at a position of the friction interface X, the bearing part 231 and/or the fixing platform 211 of the fixing base 21 include/includes a super slip material layer, and the super slip material layer is of a solid structure, and that the friction coefficient of the friction interface X is less than 0.3 is implemented by using the super slip material layer. In a first case, refer to FIG. 11A. A super slip material layer M1 is disposed only on the surface of the bearing part 231, and the super slip material layer M1 on the surface of the bearing part 231 is in contact with a surface of the fixing platform 211 of the fixing base 21. The friction interface X is formed, and the friction coefficient of the friction interface X is less than 0.3. In this solution, the super slip material layer does not need to be disposed on the fixing base 21. This helps save super slip materials and reduce costs. In a second case, refer to FIG. 11B. A super slip material layer M2 is disposed only on a surface of the fixing platform 211 of the fixing base 21. An area of the super slip material layer M2 disposed on the fixing platform 211 of the fixing base 21 needs to be larger than an area of a part that is of the bearing part 231 and that is in contact with the fixing platform 211. Because the bearing part 231 needs to slide on the super slip material layer M2, an area covered by the moving process of the bearing part needs to be considered for the super slip material layer M2 disposed in this solution. Because the fixing platform 211 of the fixing base 21 is of a simple flat-plate structure, and no circuit architecture is disposed on the fixing platform 211 of the fixing base 21, disposing the super slip material layer M2 on the fixing platform 211 has an advantage of easy manufacturing. In a third case, refer to FIG. 11C. Super slip material layers are disposed on surfaces of the bearing part 231 and the fixing platform 211 of the fixing base 21. To be specific, the super slip material layer M1 is disposed on the surface of the bearing part 231, and the super slip material layer M2 is disposed on the surface of the fixing platform 211. The super slip material layer M1 is in contact with the super slip material layer M2, and an area of the super slip material layer M2 is greater than an area of the super slip material layer M1. This solution combines the first case and the second case. The friction interface X is formed between the super slip material layer M1 and the super slip material layer M2, and the friction coefficient of the friction interface X provided in this solution may be smaller. A combination of the super slip material layer of the solid structure with the bearing part 231 and the fixing platform 211 is easier to implement, for example, can be directly connected and fastened by using an adhesive layer, and has an advantage of a simple and easy assembly process.

In implementations shown in FIG. 11A, FIG. 11B, and FIG. 11C, the super slip material layer M1 and the super slip material layer M2 may be coatings or coating structures disposed on the surfaces of the bearing part 231 and the fixing platform 211, specifically , formed by using a physical spraying or electroplating process. The super slip material layer M1 and the super slip material layer M2 may alternatively be of separate sheet-like structures. For example, the super slip material layer M1 and the super slip material layer M2 are of micro-nano structures (nanomaterials), and are connected to the surfaces of the bearing part 231 and the fixing platform 211 by using manufacturing processes such as adhering and physical press-fitting.

In an implementation, refer to FIG. 12. At the position of the friction interface X, a lubricating layer M3 is disposed between the bearing part 231 and the fixing platform 211 of the fixing base 21, the lubricating layer M3 is of an oil-like, grease-like, or paste-like structure, and that the friction coefficient of the friction interface X is less than 0.3 is implemented by using the lubricating layer M3. In this solution, the lubricating layer M3 of the oil-like, grease-like, or paste-like structure is disposed between the bearing part 231 and the fixing platform 211 of the fixing base 21 to implement the friction interface X with the low friction coefficient. Because a shape of the lubricating layer M3 is not fixed, the lubricating layer M3 is added at the contact surface between the bearing part 231 and the fixing platform 211 of the fixing base 21, and the lubricating layer M3 may have a small size. This facilitates miniaturization of the camera module in the direction of the optical axis. The design of the lubricating layer M3 further helps ensure flatness of the contact surface, and it may be understood that a problem of flatness can be compensated for by using the lubricating layer M3, to avoid vibrations in the direction of the optical axis or tilts in the moving process of the image sensor 4.

In an implementation, refer to FIG. 13. No super slip material layer or lubricating oil is disposed between the bearing part 231 and the fixing platform 211 of the fixing base 21. In this implementation, that the friction coefficient of the friction interface X is less than 0.3 is implemented by performing a surface treatment manufacturing process on the surface that is in contact with the bearing part 231 and the fixing platform 211 of the fixing base 21. A surface treatment manner may be surface modification techniques, such as polishing; surface alloying techniques, such as carburizing and nitriding; surface conversion film (an additive material and a substrate generate, by using a chemical method, a chemical reaction to form a conversion film) techniques; and the like. The surface treatment manner forms the friction interface X without adding the super slip material layer or the lubricating layer, and a small size in the direction of the optical axis can be obtained.

In another implementation, the solid super slip material layer and the grease or paste-like lubricating oil may be used in a same implementation in combination. Alternatively, the solid super slip material layer and the surface obtained by using the surface treatment manufacturing process are used in a same implementation. Alternatively, the grease or paste-like lubricating oil and the surface obtained by using the surface treatment manufacturing process are used in a same implementation.

In this application, the friction coefficient of the friction interface X of the contact surface between the bearing part 231 and the fixing base 21 is set to implement sliding connection, with the low friction coefficient, between the bearing part 231 and the fixing base 21. In a process of driving the bearing part 231 of the movable base 23 to move, the image sensor 4 can be flexibly driven through the friction interface X, with the low friction coefficient, like the super slip material or lubricating layer, stability of an axial position of the image sensor 4 in the moving process is ensured, and axial displacement, vibration, tilt, or a like phenomenon is not generated. The contact between the bearing part 231 and the fixing base 21 further facilitates thermal conduction. A circuit of the bearing part 231, the coil drive member, and the image sensor all generate heat in working processes. In this implementation of this application, thermal conduction may be performed through contact between the bearing part 231 and the fixing base 21. The friction interface X includes a material having thermal conductive properties. The bearing part 231 may be a thermal conducting material, and the fixing platform 211 of the fixing base 21 may also be a thermal conducting material. A thermal conductivity of the friction interface X is greater than 0.5 W/m*K. In this solution, limiting the thermal conductivity of the friction interface helps ensure performance of the image sensor and improve quality of an image signal.

In a camera module, if a mobile station of an image sensor is floated relative to a bottom plate of the module, space between the mobile station and the bottom plate not only increases a size of the camera module in a direction of an optical axis, but also easily causes tilts of the mobile station and vibrations in the direction of the optical axis, resulting in deterioration of imaging quality. In addition, air thermal resistance is high, heat of the image sensor and a drive circuit is hard to dissipate, and a junction temperature of the image sensor is excessively high (for example, is above 70 degrees, and even reaches 90 degrees), resulting in excessive imaging noise of the image sensor and affecting the imaging quality. In an implementation of this application, the moving stability of the image sensor 4 can be ensured through contact between the bearing part 231 and the fixing platform 211. A moving route of the image sensor 4 is limited to a fixed (stable) plane (for example, the plane perpendicular to the optical axis). This avoids axial vibrations or tilts generated by the image sensor 4 in the moving process, and can ensure quality and stability of image data obtained by the image sensor 4. In addition, thermal resistance can be further reduced in this application, and heat of the bearing part can be better conducted to one side of an outer surface of the fixing base 21 by using the contact relationship between the bearing part and the fixing part, thereby improving a thermal conducting capability of the image sensor drive module 2. Heat dissipation efficiency of the image sensor 4 and the drive unit 22 can be optimized, and deterioration of imaging quality caused by an excessively high temperature of the camera module 10 in a video shooting process or a long-term shooting process is avoided. In a specific implementation provided in this application, a working junction temperature of the image sensor 4 may be controlled below 70 degrees. For example, the working junction temperature of the image sensor may be less than 50 degrees.

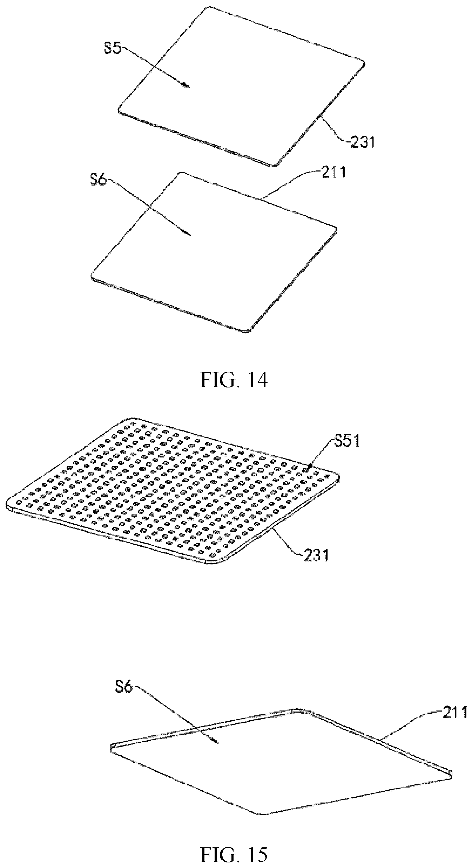

FIG. 14 shows a specific structure of the contact surface between the bearing part 231 and the fixing platform 211. In this implementation, a contact manner between the bearing part 231 and the fixing platform 211 of the fixing base 21 is contact between planes. This solution facilitates thermal conduction. A large contact area between the bearing part 231 and the fixing base 21 indicates high thermal conduction efficiency. In this solution, a heat dissipation capability can be improved through contact of complete planes. A plane that is on the bearing part 231 and that is used to be in contact with the fixing base 21 is a first plane S5, a plane that is on the fixing platform 211 of the fixing base 21 and that is used to be in contact with the bearing part 231 is a second plane S6, and both the first plane S5 and the second plane S6 are of continuous and complete plane structures.

FIG. 15 shows a specific structure of the contact surface between the bearing part 231 and the fixing platform 211. A contact manner between the bearing part 231 and the fixing platform 211 of the fixing base 21 is contact between a plane and arrayed bumps, at a position at which the bearing part 231 is in contact with the fixing platform 211, a structure of one of the bearing part 231 and the fixing platform 211 is a complete planar structure, and a structure of the other one of the bearing part 231 and the fixing platform 211 is an arrayed bump structure. As shown in FIG. 15, the bearing part 231 includes an arrayed bump structure S51, a structure in which the fixing platform 211 is in contact with the bearing part 231 is the second plane S6, and the arrayed bump structure S51 is disposed in correspondence with all regions of the second plane S6. In this solution, a problem of a position deviation in the direction of the optical axis caused by flatness of contact between planes can be resolved by the contact between the arrayed bump structure S51 and the second plane S6. Disposing the arrayed bump structure S51 is easy to control flatness of a plane including positions at which bumps are in contact with the plane. In a process of relative movement, it can be more stable and the friction coefficient can be stable. In the implementation shown in FIG. 15, the arrayed bump structure S51 may alternatively be disposed on the fixing platform 211. Correspondingly, the second plane S6 is disposed on the bearing part 231.

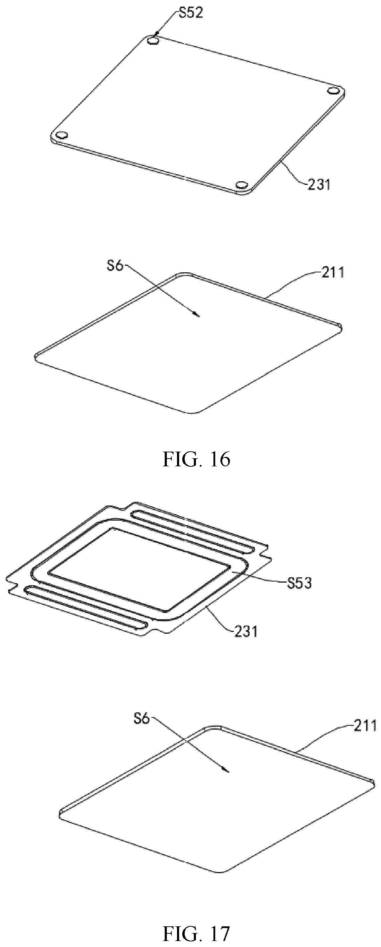

FIG. 16 shows a specific structure of the contact surface between the bearing part 231 and the fixing platform 211. A contact manner between the bearing part 231 and the fixing platform 211 of the fixing base 21 is contact between a plane and a plurality of arrayed bumps, at a position at which the bearing part 231 is in contact with the fixing platform 211, a structure of one of the bearing part 231 and the fixing platform 211 is a complete planar structure, and a structure of the other one of the bearing part 231 and the fixing platform 211 is a multi-bump structure. As shown in FIG. 16, the multi-bump structure S52 is disposed on the bearing part 231, a structure in which the fixing platform 211 is in contact with the bearing part 231 is the second plane S6, and the multi-bump structure S52 is disposed in correspondence with partial regions of the second plane S6. In this implementation, the second plane S6 is in a rectangular shape, and the multi-bump structure S52 is disposed at positions corresponding to the four corners of the second plane S6. In another implementation, the multi-bump structure S52 may alternatively be disposed at other positions corresponding to the second plane S6, for example, midpoint positions of sides corresponding to the second plane S6. Alternatively, the multi-bump structure S52 is correspondingly distributed on each side. In the implementation shown in FIG. 16, the multi-bump structure S52 may alternatively be disposed on the fixing platform 211. Correspondingly, the second plane S6 is disposed on the bearing part 231. In this solution, it helps adjust flatness of the position of the friction interface through cooperation of the bump structure S52 distributed in local positions and the plane. A position of the contact surface between the fixing platform 211 and the bearing part 231 does not require high manufacturing precision of the flatness to meet the moving stability of the image sensor 4.

Refer to FIG. 17, FIG. 18, and FIG. 19. The three figures show three specific different structure forms of the contact surface between the bearing part 231 and the fixing platform 211. In an implementation, a contact manner between the bearing part 231 and the fixing platform 211 of the fixing base 21 is contact between a plane and a protruding rod structure, or contact between protruding rod structures. Compared with the bump structure, a contact area may be increased by disposing the rod structure. This helps reduce pressure, and avoids affecting positioning precision in the direction of the optical axis due to friction damage of a contact surface in a process of relative movement. Compared with the full-plane contact structure, the rod structure can resolve a problem of movement in the direction of the optical axis caused by the flatness.

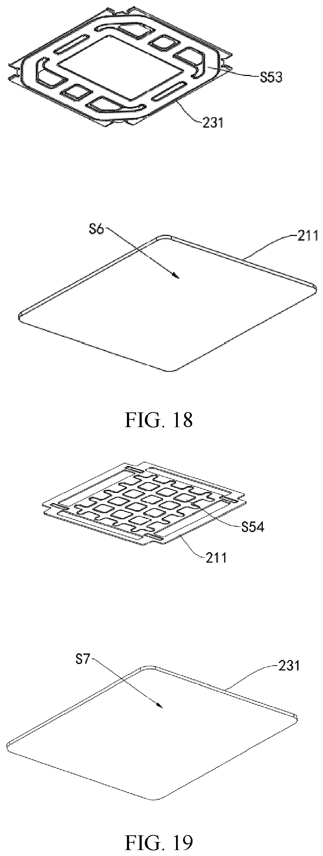

As shown in FIG. 17, at a contact position between the bearing part 231 and the fixing platform 211 of the fixing base 21, a structure of the bearing part 231 is a protruding rod structure S53, and a structure of the fixing platform 211 is the complete planar structure S6. The protruding rod structure S53 slides on the planar structure S6 to implement the friction interface. In this implementation, the protruding rod structure S53 is distributed in a ring shape. As shown in FIG. 18, a structure of the bearing part 231 is also the protruding rod structure S53. A difference from the implementation shown in FIG. 17 lies in that the protruding rod structure S53 in the implementation shown in FIG. 18 is distributed in a mesh shape.

As shown in FIG. 19, at a contact position between the bearing part 231 and the fixing platform 211 of the fixing base 21, a structure of the fixing platform 211 is a protruding rod structure S54. In this solution, a structure of the bearing part 231 may be a planar structure S7. The structure of the bearing part 231 may alternatively be a rod-like structure. In another implementation, a protruding rod structure may alternatively be disposed on the bearing part 231, and the fixing platform 211 may be disposed as a planar structure.

FIG. 14 to FIG. 19 schematically describe structure forms of several different friction interfaces, and are not intended to limit the structure forms of the friction interface in this application. In this application, friction interfaces in different structure forms may be designed based on specific design requirements.

Refer to FIG. 10A. In this application, the bearing part 231 is in sliding contact with the fixing platform 211 to provide a moving platform for the bearing part 231, and the bearing part 231 does not leave the fixing platform 211 in the moving process. Therefore, the bearing part 231 needs to have a retention force to maintain the contact between the bearing part 231 and the fixing platform 211. Specifically, a retention structure is disposed in the image sensor drive module 2. A part of the retention structure is located at the bearing part 231 (which may be understood that the part of the retention structure is a partial structure of the bearing part), and a part of the retention structure is located at the fixing base 21 (which may be understood that the part of the retention structure is a partial structure of the fixing base). The retention structure provides the retention force for the bearing part 231 to maintain the contact between the bearing part 231 and the fixing platform 211 of the fixing base 21. Disposing the retention structure may be implemented in a plurality of different implementations. Details are as follows.

In an implementation, as shown in FIG. 10A, the retention structure 26 includes the connecting part 233 and the fixing part 232. The connecting part 233 is connected to the bearing part 231, and the fixing part 232 is located on the fixing base 21, in other words, the fixing part 232 is fixedly connected to the fixing base 21. A partial structure that is of the fixing base 21 and to which the fixing part 232 is fixedly connected may be used as a part of the retention structure. In this solution, the connecting part 233 of the movable base 23 is used as a part of the retention structure, the connecting part 233 is of an elastic structure, and an elastic force of the connecting part 233 acts on the bearing part 231 to form the retention force. In this implementation, the elastic force of the connecting part 233 is used as the retention force to ensure the contact between the bearing part 231 and the fixing base 21, and another retention structure is added other than the fixing base and the movable base when it may be needed. The connecting part 233 can not only ensure that the bearing part 231 moves under a driving force of the drive unit 22, but also provide the retention force. A dual-function design of the connecting part 233 facilitates miniaturization of a size of the image sensor drive module 2.

Refer to FIG. 10A. A connection point between the connecting part 233 and the fixing part 232 is a first position 2331, a connection point between the connecting part 233 and the bearing part 231 is a second position 2332, elastic potential energy exists between the first position 2331 and the second position 2332, and the elastic potential energy forms the retention force. This solution provides an embodiment of how to form the elastic force of the connecting part 233. Forming the elastic potential energy between the first position 2331 and the second position 2332 uses an assembly position of the connecting part 233. This helps ensure miniaturization of the size of the image sensor drive module 2.

Specifically, in a direction perpendicular to the fixing platform 211, in other words, in the direction of the optical axis, a distance D1 between the first position 2331 and the fixing platform 211 in the direction of the optical axis is less than a distance D2 between the second position 2332 and the fixing platform 211 in the direction of the optical axis. It may be understood that the first position 2331 and the second position 2332 form a stepped architecture in an assembly process, and the assembled connecting part 233 has a force of pulling the bearing part 231 in a direction toward the fixing platform 211. In other words, elastic tension of the connecting part 233 acts on the second position 2332 to form the retention force toward the fixing platform 211. In this solution, distance relationships between the first position 2331 and the second position 2332, and the fixing platform 211 are determined in a process of assembling the movable base 23. When it is ensured that D1 is smaller than D2, this can provide a pulling force of the second position 2332 toward the fixing platform 211, this means, form the retention force. Forming the retention force in this solution is implemented in the assembly process. For the connecting part 233 of the movable base 23, a structure of the connecting part 233 does not need to be specially designed in a manufacturing process of the connecting part 233 for considering forming the retention force. This can reduce manufacturing costs.

In another implementation, the connecting part 233 is used as the retention structure, and the fixing part 232 and the bearing part 231 may be designed to be non-coplanar in a manufacturing process of the movable base 23. To be specific, when the connecting part 233 is in a free state (without any limiting force), the first position 2331 at the connection point between the connecting part 233 and the fixing part 232, and the second position 2332 at the connection point between the connecting part 233 and the bearing part 231 correspond to different positions of the optical axis. There is a height difference in the direction of the optical axis between the first position 2331 and the second position 2332 before assembly. In the assembly process, the first position 2331 and the second position 2332 may be assembled to be in a coplanar state. Alternatively, in the assembly process, a specific physical position of the first position 2331 or the second position 2332 may be adjusted to store energy, to be specific, store the elastic potential energy in the connecting part 233. In addition, a force, of the elastic potential energy, acting on the bearing part 231 is the retention force toward the fixing platform 211. This solution helps implement miniaturization of the size of the assembled image sensor drive module.

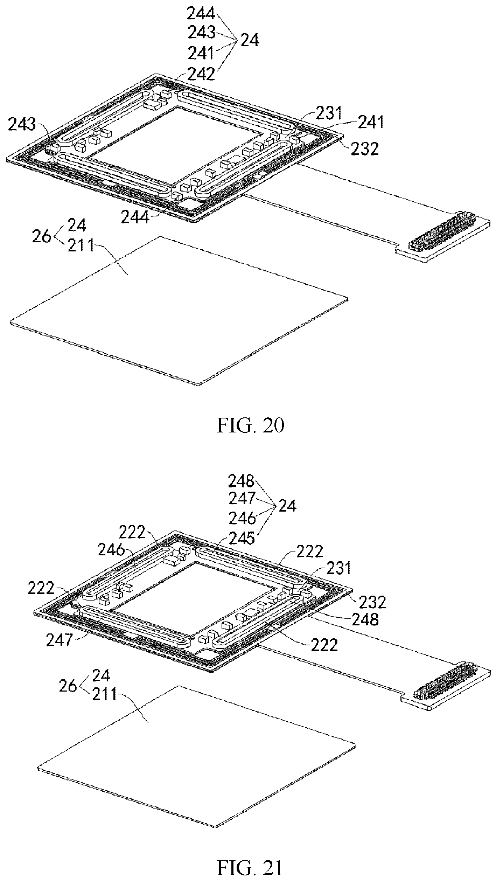

In an implementation, refer to FIG. 20 and FIG. 21. The retention structure 26 includes a magnetic member 24 and the fixing platform 211. The magnetic member 24 is fastened to the bearing part 231, and a magnetic attraction force between the magnetic member 24 and the fixing platform 211 forms at least a part of the retention force. In this solution, the magnetic member is disposed on the bearing part 231, and the fixing platform 211 is designed to cooperate with the magnetic member to form the magnetic attraction force. A service life and stability of the retention force can be ensured by using the magnetic attraction force as the retention force. When the elastic force of the connecting part 233 is used as the retention force, an elastic coefficient of the elastic force may change during long-term use, and elastic performance of the connecting part 233 may be reduced. In this case, the retention force between the bearing part 231 and the fixing platform 211 may be affected. If the retention force is insufficient to support the bearing part 231 to be in contact with the fixing platform 211 through the friction interface, the moving stability of the image sensor 4 is affected, and thermal conductivity of the image sensor drive module 2 is also affected. In this solution, the magnetic member 24 is disposed, and the magnetic attraction force is used as the retention force, so that continuous stability of the retention force can be ensured, and a service life of the image sensor drive module 2 can be prolonged.

In an implementation, the retention force may include the elastic force provided by the connecting part 233, and further include the magnetic force provided by the magnetic member 24.

In a specific implementation, as shown in FIG. 20, the magnetic member 24 includes four magnets 241, 242, 243, and 244. The four magnets 241, 242, 243, and 244 are disposed on the bearing part 231 in a dot-shaped distribution state, and are adjacent to an outer edge of the bearing part 231. The outer edge of the bearing part 231 is edge positions of the bearing part 231 toward the fixing part 232. In this implementation, the four magnets 241, 242, 243, and 244 are distributed at the four corners of the bearing part 231. In another implementation, the magnetic member 24 may include two or three magnets, or a quantity of magnets may be greater than or equal to five, and a plurality of magnets are evenly distributed and spaced at the edge positions of the bearing part 231. Specifically, when there are three magnets, the three magnets may constitute one plane. This can ensure surface contact of the contact surface between the bearing part and the fixing base. When there are four magnets, the magnets may be symmetrically distributed at the four external corner positions of the image sensor. This helps ensure the moving stability of the image sensor.

In a specific implementation, as shown in FIG. 21, the magnetic member 24 includes four magnetic stripes 245, 246, 247, and 248. The four magnetic stripes 245, 246, 247, and 248 are all of a long-stripe shape, are symmetrically distributed on the bearing part 231 in pairs, and are adjacent to an outer edge of the bearing part 231. The outer edge of the bearing part 231 is edge positions of the bearing part 231 toward the fixing part 232. In this implementation, the magnetic stripes 245, 246, 247, and 248 are located inside a coil, and the coil is the movable member 222 of the drive unit. In another implementation, the magnetic stripes 245, 246, 247, and 248 may alternatively be disposed at a periphery of the movable member 222. In another implementation, a quantity of magnetic stripes may be two, three, or more. Disposing the long stripe-shaped magnetic stripes not only provides a large magnetic attraction force, but also facilitates assembly and fastening.

**In** this embodiment of this application, the magnetic attraction force between the magnetic member 24 disposed on the bearing part 231 and the fixing base 21 needs to ensure that the bearing part 231 can maintain contact with the fixing base 21 in the moving process, and the magnetic attraction force needs to be controlled within a preset range, in other words, the magnetic attraction force cannot be excessively large. If the magnetic attraction force is excessively large, the drive unit 22 may be unable to drive the bearing part 231 to move, or efficiency of moving the bearing part 231 may be affected.

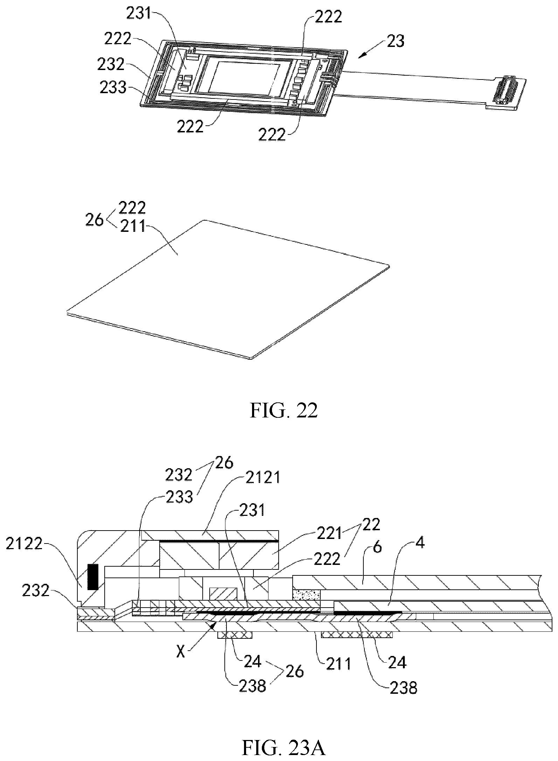

**In** a specific implementation, refer to FIG. 22. The retention structure 26 includes the movable member 222 and the fixing platform 211. Specifically, the movable member 222 is the magnetic drive member, and the fixing member 221 is the coil drive member. In this implementation, the fixing member 221 is fastened to the fixing base 21, and the circuit board routing needs to be disposed on the fixing base 21 to supply power to the coil drive member. In general, in this solution, the magnetic drive member 222 used as the magnetic member (similar to architectures of the magnet and magnetic stripe described above) forms the magnetic attraction force between the magnetic drive member 222 and the fixing platform 211, and the magnetic attraction force between the magnetic drive member 222 and the fixing platform 211 forms the at least a part of the retention force. In this solution, the magnetic drive member (movable member 222) is used to form the retention structure. This facilitates a design of the miniaturization of the size of the image sensor drive module 2.

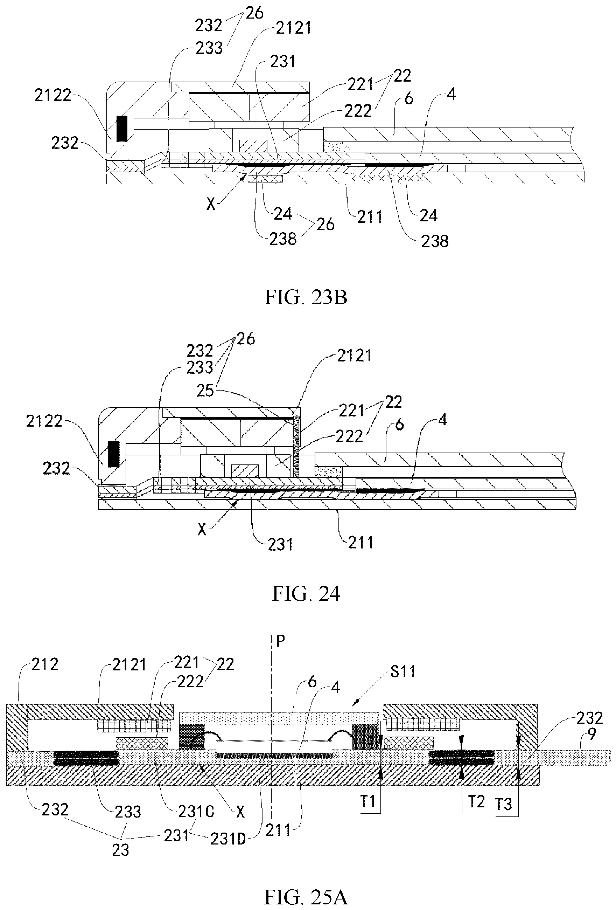

Refer to FIG. 23A and FIG. 23B. In an implementation, the magnetic member is disposed on the fixing platform 211 of the fixing base 21, and a magnetic attraction member, for example, a steel plate, is disposed on the bearing part 231 of the movable base 23. A magnetic attraction force between the magnetic member and the magnetic attraction member forms the retention force. Specifically, in this implementation, the retention structure 26 includes the magnetic member 24 and the magnetic attraction member 238. The magnetic attraction member 238 has a magnetic conductive material and is a part of the bearing part 231. The magnetic member 24 is fastened to the fixing base 21 and is located at the position of the contact surface between the fixing base 21 and the bearing part 231. The magnetic attraction force between the magnetic member 24 and the magnetic attraction member 238 forms the retention force. In the implementation shown in FIG. 23A, the magnetic member 24 is located on a surface that is of the fixing platform 211 of the fixing base 21 and that is away from the bearing part 231. In the implementation shown in FIG. 23B, the magnetic member 24 is embedded inside the fixing platform 211 of the fixing base 21. The bearing part 231 includes the circuit board structure and the magnetic attraction member 238, and the magnetic attraction member is fastened to a bottom surface of the circuit board structure to reinforce strength of the circuit board. The magnetic attraction member 238 is located on a surface that is of the bearing part 231 and that faces the fixing platform 211. The magnetic attraction member 238 is in contact with the fixing platform 211 to form the friction interface X. The magnetic attraction member 238 is further configured to bear the image sensor 4. In this implementation, the magnetic attraction member 238 may have the same structure as the reinforcing plate structure 23B in the implementation shown in FIG. 7. However, in this implementation, the magnetic attraction member 238 may not only provide a structure reinforcing function for the bearing part 231, but also may bear the image sensor 4. In addition, the magnetic attraction member 238 needs to have the magnetic conductive material. The magnetic attraction member 238 needs to cooperate with the magnetic member 24 to generate the magnetic attraction force. However, in the implementation shown in FIG. 7, the reinforcing plate structure 23B does not need to form the magnetic attraction force, and only needs to provide a reinforcing force for the circuit board structure 23A and bear the image sensor 4.

In the implementations shown in FIG. 23A and FIG. 23B, the magnetic member 24 and the magnetic attraction member 238 form a part of the retention structure 26, and the other part of the retention structure 26 includes the connecting part 233 and the fixing part 232. To be specific, in this implementation, the retention structure 26 ensures contact reliability between the bearing part 231 and the fixing platform 211 by the magnetic force and the elastic force acting together between the bearing part 231 and the fixing platform 211. In this solution, the magnetic member 24 is disposed on the fixing platform 211, and the magnetic attraction member, for example, the steel plate, is correspondingly disposed on the bearing part 231. This design can reduce impact of the magnetic member on the drive unit 22 and the image sensor 4, and ensure moving stability of the image sensor 4 and quality of a generated image signal. In this solution, the magnetic member 24 is disposed on the surface that is of the fixing base 21 and that is away from the bearing part 231, so that distances between the magnetic member 24, and the image sensor 4 and the drive unit 22 can be maximized. This helps reduce impact of the magnetic member 24 on the drive unit 22 and the image sensor 4, and ensure moving stability of the image sensor 4 and quality of a generated image signal. The magnetic member 24 is embedded inside the fixing platform 211, so that the magnetic member 24 and the fixing platform 211 are integrated. This does not affect an overall structure of the image sensor drive module 2, and facilitates assembly and positioning between the image sensor drive module 2 and another structure of an electronic device.

In a specific implementation, refer to FIG. 24. The image sensor drive module includes an elastic member 25. One end of the elastic member 25 is connected to the top plate 2121 of the fixing frame 212 of the fixing base 21, and the other end is connected to the bearing part 231. It may be understood that one end of the elastic member is located on the bearing part, specifically, the one end of the elastic member is a partial structure of the bearing part; and the other end of the elastic member is located on the fixing base, specifically, the other end of the elastic member is a partial structure of the fixing base. In an assembled state, the elastic member 25 is in an elastically compressed state, and the elastic member 25 applies an elastic force to the bearing part 231. The elastic force is toward the contact surface between the bearing part 231 and the fixing base 21, and the elastic force is a retention force for ensuring that the bearing part 231 is in contact with the fixing platform 211. The elastic member 25 can maintain a contact state at the friction interface X. In the implementations shown in FIG. 23A and FIG. 23B, the elastic member 25, the connecting part 233, and the fixing part 232 together form the retention structure 26. In other words, the retention force provided by the connecting part 233 and the retention force of the elastic member 25 are utilized, so that the contact between the bearing part 231 and the fixing platform 211 can be more stable.

In this application, the bearing part 231 is in contact with the fixing platform 211 of the fixing base 21, and the bearing part 231 further has the retention force for maintaining the contact state between the bearing part 231 and the fixing base 21. A retention force direction is toward the contact surface between the bearing part 231 and the fixing base 21, so that the retention force can abut the bearing part 231 into contact with the fixing base 21 regardless of a position or an environment of the image sensor drive module 2. The retention force needs to be greater than a sum of gravity forces of the bearing part 231 and all structures carried on the bearing part 231, so that the bearing part 231 can move on a fixed plane in the moving process of the image sensor 4 regardless of how the camera module 10 is placed. The moving stability of the image sensor 4 can be implemented, and the image sensor 4 can be prevented from tilting or generating axial movement. The axial movement is in the direction of the optical axis. It may be understood that a plane on which the contact surface between the bearing part 231 and the fixing base 21 is located is a plane perpendicular to the optical axis. The image sensor drive module 2 provided in this application can drive the image sensor 4 to move on the plane perpendicular to the optical axis.

Refer to FIG. 25A. In an implementation, the movable base 23 is of the integrated circuit board structure. To be specific, the bearing part 231, the connecting part 233, and the fixing part 232 are integrally formed, and a periphery of the fixing part 232 is configured to connect the circuit board (for example, an FPC) 9. The circuit board 9 is configured to electrically connect the image sensor 4 to a processor of an electronic device. In this implementation, the circuit board 9 and the fixing part 232 are of the integrated circuit board structure. The circuit board is formed by using an integrated molding process. A manufacturing process is simple, assembly is convenient, and structure stability is good. Trace layers of the movable base 23 are only routed in a same circuit board. This can ensure stability of signal transmission and reduce signal losses. The bearing part 231 includes a first region 231C configured to bear the movable member 222 and another electronic device, and a second region 231D configured to bear the image sensor 4. A size of the movable base 23 in the direction of the optical axis P of the image sensor 4 is a thickness of the movable base 23, and a thickness T1 of the first region 231C, a thickness T2 of the connecting part 233, and a thickness T3 of the fixing part 232 are equal. The movable base including the integrated circuit structure can save space of the image sensor drive module in a thickness direction. This facilitates the design of the miniaturization of the size of the image sensor drive module in the direction of the optical axis of the image sensor.

The first region 231C is connected between the second region 231D and the connecting part 233, and a thickness T4 of the second region 231D is less than the thickness T1 of the first region 231C. The first region 231C is disposed around edges of the second region 231D and is enclosed with the second region 231D together to form accommodation space (because the accommodation space in FIG. 25A is occupied by the image sensor 4, the accommodation space is not marked). The accommodation space is used to accommodate the image sensor 4, and the image sensor 4 may be connected to a bottom surface and the second region 231D by using an adhesive layer. A gap may be provided between a side surface of the image sensor 4 and an inner wall of the accommodation space. This helps mount the image sensor. In this solution, the bearing part 231 is provided with a groove, and the groove is configured to accommodate the image sensor, so that space in the direction of the optical axis is saved, and the design of the small size in the direction of the optical axis is easily implemented. A contact surface between the first region 231C and the fixing platform 211 of the fixing base 21 is coplanar with a contact surface between the second region 231D and the fixing platform 211. In this implementation, the second region 231D of the bearing part 231 may be of a complete flat plate structure, in other words, the second region 231D is not provided with any through hole or window structure. In another implementation, the second region 231D may alternatively be of a frame-shaped structure. To be specific, the second region 231D carries only a part of an edge of the image sensor 4, and a partial region of the image sensor 4 is separated from the fixing platform 211 through a gap. The gap may be air, or may be filled with a thermal conducting medium.

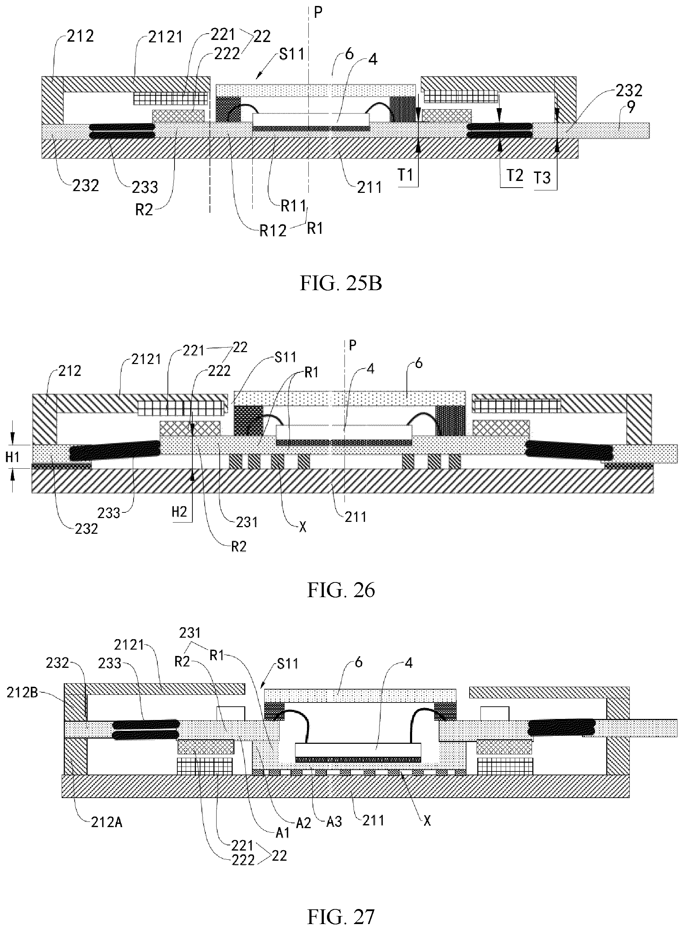

FIG. 25B is the same as an implementation shown in FIG. 25A, and a detailed structure of the first bearing region R1 is shown in FIG. 25B. The first bearing region R1 includes a first central region R11 and a second central region R12, and the first central region R11 and the second central region R12 are directly opposite to the opening S11 in the extension direction of the optical axis. The second central region R12 is located on a periphery of the first central region R11 and is connected between the first central region R11 and the second bearing region R2. The first central region R11 is configured to mount the image sensor 4, and the second central region R12 is configured to mount the optical component 6. In this implementation, the movable base 23 is of the integrated circuit board structure. A size of the movable base 23 in the direction of the optical axis of the image sensor 4 is a thickness of the movable base, and a thickness T1 of the second bearing region R2, a thickness T2 of the connecting part 233, and a thickness T3 of the fixing part 232 are equal.

A thickness of at least a part of the first bearing region R1 is less than the thickness of the second bearing region R2, so that the at least a part of the first bearing region R1 is of a concave structure, and forms accommodation space used to accommodate the image sensor 4. In the implementations shown in FIG. 25A and FIG. 25B, a thickness of the first central region R11 of the first bearing region R1 is less than a thickness of the second central region R12, and the thickness of the second central region R12 is equal to the thickness of the second bearing region R2. The second central region R12 and the first central region R11 are enclosed together to form the accommodation space used to accommodate the image sensor 4. In another implementation, a thickness of the first central region R11 may be equal to a thickness of the second central region R12, in other words, the first bearing region R1 is of a structure with a uniform thickness. The thickness of the first bearing region R1 is less than the thickness of the second bearing region R2. In this way, the accommodation space used to accommodate the image sensor is formed between the second bearing region R2 and the first bearing region R1.

Refer to FIG. 26. In an implementation shown in FIG. 26, the friction interface X between the bearing part 231 and the fixing platform 211 is of a three-dimensional layer structure. For specific designs of the friction interface X, refer to the implementations shown in FIG. 11A, FIG. 11B, and FIG. 11C. In the extension direction of the optical axis P of the image sensor 4, a height difference is formed between the fixing part 232 and the bearing part 231. To be specific, a vertical distance H1 between the fixing platform 211 and a surface that is of the fixing part 232 and that is away from the fixing platform 211 is less than a vertical distance H2 between the fixing platform 211 and a surface that is of the bearing part 231 and that is away from the fixing platform 211. In this implementation, the fixing part 232 and the fixing platform 211 are connected by using an adhesive layer.

In the implementations shown in FIG. 25A and FIG. 26, the drive unit 22 is located on a side that is of the bearing part 231 and that is away from the fixing platform 211, in other words, the drive unit 22 is located between the top plate 2121 of the fixing frame 212 and the bearing part 231.

Refer to FIG. 27. In an implementation, the fixing platform 211 of the fixing base 21 is flat, the fixing frame 212 is connected to an edge region of the fixing platform 211, and the fixing frame 212 is configured to connect to the fixing part 232 of the movable base 23. Specifically, the fixing frame 212 includes a first part 212A and a second part 212B. The first part 212A is located between the fixing part 232 and the fixing platform 211, and supports the fixing part 232 above the fixing platform 211. The second part 212B is located on a side that is of the fixing part 232 and that is away from the first part 212A, in other words, the fixing part 232 is sandwiched between the first part 212A and the second part 212B. The drive unit 22 is located between the bearing part 231 and the fixing platform 211, the fixing member 221 of the drive unit 22 is fastened to the fixing platform 211, and the movable member 222 is fastened to the surface that is of the bearing part 231 and that faces the fixing platform 211. Specifically, the movable member 222 is fastened to a side that is of the second bearing region R2 of the bearing part 231 and that is away from the top plate 2121 (in other words, a surface that is of the second bearing region R2 and that faces the fixing platform 211). In this solution, a position of the fixing member 221 on the fixing platform 211 is located on a periphery of the friction interface X between the bearing part 231 and the fixing platform 211. A moving range of the bearing part 231 on the fixing platform 211 is within a range limited by the fixing member 221 on the fixing platform 211. The bearing part 231 includes three parts: a first section A1, a second section A2, and a third section A3. The second section A2 is connected between the first section A1 and the third section A3. The first section A1 is connected to the connecting part 233 and is a section configured to dispose the movable member 222 and another electronic device. The third section A3 is configured to support the image sensor 4. The first section A1 may be parallel to the third section A3.

In the implementation shown in FIG. 27, the fixing frame 212 of the fixing base 21 includes the top plate 2121. The top plate 2121 is configured to block the connecting part 233, and the top plate 2121 is configured to protect the connecting part 233.

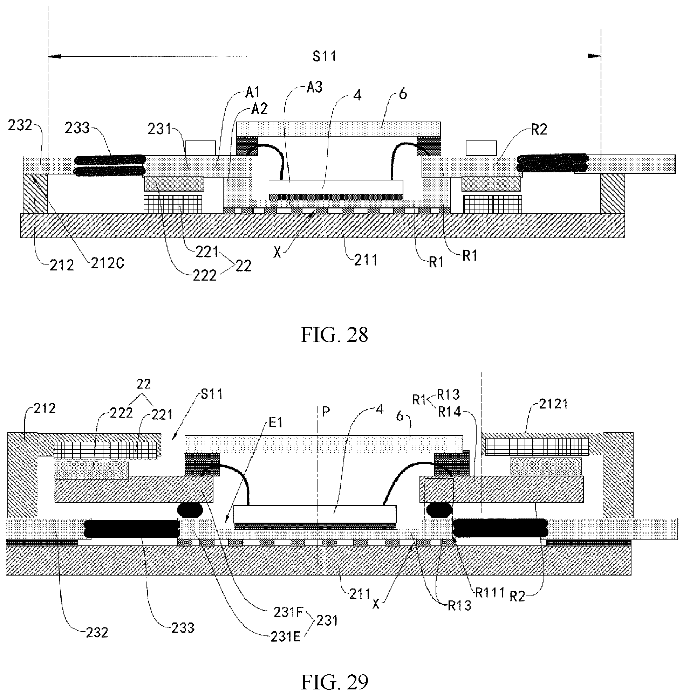

In another implementation, as shown in FIG. 28, no top plate may be disposed on the fixing base 21, and the fixing part 232 of the movable base 23 overlaps a top surface 212C of the fixing frame 212. This implementation helps implement miniaturization of the image sensor drive module, and save space of an electronic device. In the implementation shown in FIG. 28, a region enclosed by an end that is of the fixing frame 212 and that is away from the fixing platform 211 is the opening S11. In the process of assembling the image sensor 4, the image sensor 4 is assembled to the first bearing region R1 of the bearing part 231 through the opening S11.

Refer to FIG. 29. In an implementation, the bearing part 231 includes a first bearing platform 231E and a second bearing platform 231F, the first bearing platform 231E is configured to bear the image sensor 4, and the first bearing platform 231E is provided with an accommodation slot E1. The image sensor 4 is fastened to the accommodation slot E1 of the first bearing platform 231E by using an adhesive layer, the first bearing platform 231E is in contact with the fixing platform 211 of the fixing base 21 to form the contact surface, and a direction perpendicular to the contact surface is the direction of the optical axis P. The second bearing platform 231F and the connecting part 233 are stacked in the direction of the optical axis P, the movable member 222 of the drive unit 22 is fastened to the second bearing platform 231F, and the fixing member 221 is fastened to the top plate 2121 of the fixing frame 212 of the fixing base 21. The drive unit 22 is located on a side that is of the second bearing platform 231F and that is away from the connecting part 233. The first bearing platform 231E and the connecting part 233 are connected together to form an integrated structure, and the connecting part 233 is located between the second bearing platform 231F and the contact surface (namely, the friction interface X) in the direction of the optical axis P. The first bearing platform 231E and the second bearing platform 231F are connected by using solder balls, in other words, mechanical connection can also be implemented. In this implementation, the bearing part 231 is designed as a structure of two plates (specifically, the first bearing platform 231E and the second bearing platform 231F), and a design of a small size of the movable base 23 in a direction perpendicular to the optical axis P can be implemented by using an architecture in which the second bearing platform 231F and the connecting part 233 are stacked. When this solution is applied to an electronic device, a board occupation area of a circuit board in which the camera module is located can be reduced. In the implementation shown in FIG. 29, a part that is of the second bearing platform 231F and that is directly opposite to the top plate 2121 is the second bearing region R2, and the second bearing region R2 and the connecting part 233 are stacked. In the direction of the optical axis P, the connecting part 233 is located between the second bearing region R2 and the fixing platform 211, the first bearing region R1 includes a first assembly region R13 and a second assembly region R14, and the first assembly region R13 is configured to bear the image sensor 4. The connecting part 233 surrounds the first assembly region R13 and is connected to an edge of the first assembly region R13, and the second assembly region R14 and the second bearing region R2 are connected together. The second assembly region R14 and a part of the first assembly region R13 are overlapped to form an overlapping region R111, and positions of mechanical connection and electrical connection between the first assembly region R13 and the second assembly region R14 are all in the overlapping region R111. A part within a rectangular frame indicated by dashed lines in FIG. 29 represents the overlapping region R111.

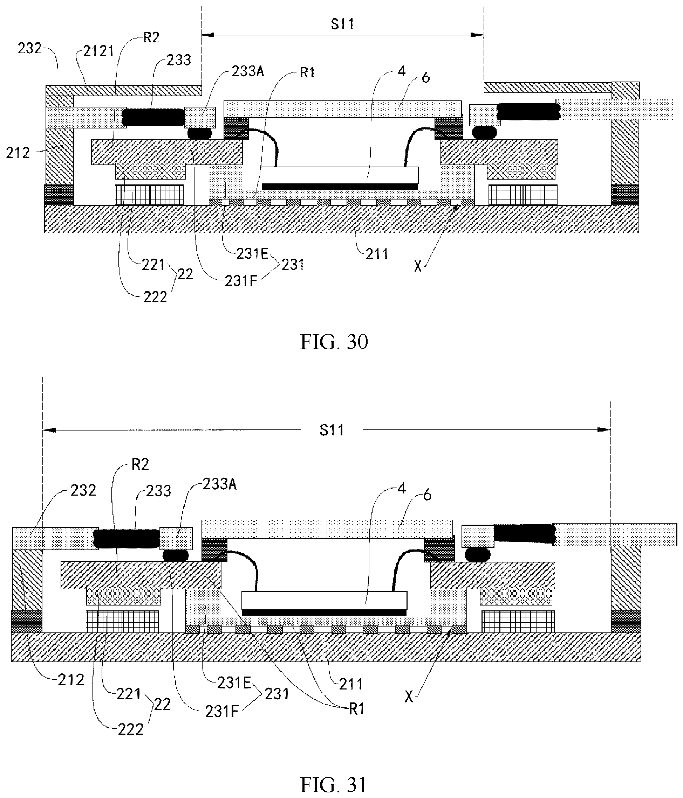

Refer to FIG. 30 and FIG. 31. In this implementation, the first bearing platform 231E and the connecting part 233 are respectively connected to a top surface and a bottom surface of the second bearing platform 231F, and the second bearing platform 231F is located between the connecting part 233 and the fixing platform 211 in the direction of the optical axis P. It may also be understood that the second bearing platform 231F is located between the connecting part and the friction interface in the direction of the optical axis P. In this implementation, the first bearing platform 231E and the second bearing platform are directly connected to form a Z-shaped architecture, the connecting part 233 is disposed on a side that is of the second bearing platform 231F and that is away from the fixing platform 211, and the connecting part 233 is connected to the top surface of the second bearing platform 231F by using an adapting plate 233A. The adapting plate 233A and the second bearing platform 231F are connected by using solder balls, in other words, mechanical connection or electrical connection can be implemented. The drive unit 22 is located between the second bearing platform 231F and the fixing platform 211, the movable member 222 is fastened to the second bearing platform 231F, and the fixing member 221 is fastened to the fixing platform 211.

As shown in FIG. 30, the part that is of the second bearing platform 231F and that is directly opposite to the top plate 2121 is the second bearing region R2, and the movable member 222 is fastened to the surface that is of the second bearing region R2 and that faces the fixing platform 211. In the direction of the optical axis, the connecting part 233 is located between the top plate 2121 and the second bearing region R2. The first bearing platform 231E is the first bearing region R1.

In the implementation shown in FIG. 30, the fixing frame 212 includes the top plate 2121. The top plate 2121 is located above the connecting part 233, and may protect the connecting part 233. The fixing part 232 and the fixing platform 211 are spaced apart by using a part of the fixing frame 212, in other words, the fixing part 232 is fastened to the fixing frame 212.

In the implementation shown in FIG. 31, no top plate 2121 is disposed on the fixing frame 212, and the fixing part 232 is fastened to the top surface of the fixing frame 212, in other words, the fixing part 232 is fastened to a surface that is of the fixing frame 212 and that is away from the fixing platform 211.

"First", "second", "third", "fourth", and various numbers in this specification are merely used for differentiation for ease of description, and are not construed as a limitation to the scope of this application.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

The foregoing descriptions are merely specific implementations of this application, but are not intended to limit the protection scope of this application. The protection scope of this application shall be subject to the protection scope of the claims.

## Claims

1. An image sensor drive module (2), wherein the image sensor drive module (2) is used in a camera module (10) and comprises:
• a drive unit (22), comprising a fixing member (221) and a movable member (222) that can move relative to each other;
• a fixing base (21), configured to bear the fixing member (221); and
• a movable base (23), comprising a bearing part (231), a fixing part (232), and a connecting part (233), wherein the connecting part (233) is configured to implement mechanical and electrical connection between the bearing part (231) and the fixing part (232), the bearing part (231) is configured to bear an image sensor and the movable member (222), and the fixing part (232) is connected to the fixing base (21),
• wherein a partial structure of the bearing part (231) and a partial structure of the fixing base (21) form a retention structure, the retention structure is configured to provide a retention force for the bearing part (231), the drive unit (22) is configured to drive the bearing part (231) to move relative to the fixing base (21), and contact between the bearing part (231) and the fixing base (21) is maintained by the retention force of the retention structure,
• **characterised in that** the connecting part (233) of the movable base (23) forms at least a part of the retention structure, the connecting part is of an elastic structure, and an elastic force of the connecting part (233) acts on the bearing part (231) to form the retention force, wherein a connection point between the connecting part (233) and the fixing part (232) is a first position, a connection point between the connecting part (233) and the bearing part (231) is a second position, elastic potential energy exists between the first position and the second position, and the elastic potential energy forms at least a part of the retention force,
• wherein the connecting part (233) is of a stripe-shaped spring arm structure connected between the fixing part (232) and the bearing part (231), and the bearing part (231), the connecting part (233), and the fixing part (232) are integrally formed.

2. The image sensor drive module according to claim 1, wherein the drive unit is configured to drive the bearing part to move relative to the fixing base in a plane perpendicular to an optical axis of a lens assembly of the camera module.

3. The image sensor drive module according to any of claim 2, wherein the fixing base comprises a fixing platform, the bearing part is in contact with an inner surface of the fixing platform, the bearing part is configured to bear the image sensor to move on the inner surface of the fixing platform, the image sensor is located on a light emergent side of the lens assembly of the camera module, the inner surface of the fixing platform is perpendicular to the optical axis of the lens assembly, a distance that is between the first position and the inner surface of the fixing platform and that is in a direction of the optical axis of the lens assembly is less than a distance that is between the second position and the inner surface of the fixing platform and that is in the direction of the optical axis of the lens assembly, and elastic tension of the connecting part acts on the second position to form the retention force toward the fixing platform.

4. The image sensor drive module according to any one of claims 1 to 3, wherein a magnetic member is disposed on the bearing part, the magnetic member and a part of the fixing base configured to be in contact with the bearing part form at least a part of the retention structure, the part of the fixing base configured to be in contact with the bearing part comprises a magnetic conductive material, and a magnetic attraction force between the magnetic member and the fixing base forms at least a part of the retention force.

5. The image sensor drive module according to any one of claims 1 to 3, wherein a magnetic member is disposed on the fixing base, a part of the bearing part comprises a magnetic conductive material, the part of the bearing part comprising the magnetic conductive material is a magnetic attraction member, the magnetic member and the magnetic attraction member form at least a part of the retention structure, the magnetic member is located at a position of a contact surface between the fixing base and the bearing part, and a magnetic attraction force between the magnetic member and the magnetic attraction member forms the retention force.

6. The image sensor drive module according to any one of claims 1 to 5, wherein a friction interface is formed at the contact surface between the bearing part and the fixing base, and a friction coefficient of the friction interface is less than 0.3.

7. The image sensor drive module according to claim 6, wherein at a position of the friction interface, the bearing part and/or the fixing base comprise/comprises a low-friction material layer, and the low-friction material layer is of a solid structure,
and that the friction coefficient of the friction interface is less than 0.3 is implemented by using the low-friction material layer.

8. The image sensor drive module according to claim 6, wherein the friction interface comprises a material having thermal conductive properties, a thermal conductivity of the friction interface is greater than 0.5 W/m*K.

9. The image sensor drive module according to any one of claims 1 to 8, wherein a contact manner between the bearing part and the fixing base is of a contact between planes, a plane that is on the bearing part and that is used to be in contact with the fixing base is a first plane, a plane that is on the fixing base and that is used to be in contact with the bearing part is a second plane, and both the first plane and the second plane are of continuous and complete plane structures.

10. The image sensor drive module according to any one of claims 1 to 8, wherein a contact manner between the bearing part and the fixing base is of a contact between a plane and arrayed bumps, at a position at which the bearing part is in contact with the fixing base, a structure of one of the bearing part and the fixing base is a complete planar structure, a structure of the other one of the bearing part and the fixing base is an arrayed bump structure, and the arrayed bump structure is disposed in correspondence with all regions of the complete planar structure.

11. The image sensor drive module according to any one of claims 1 to 8, wherein a contact manner between the bearing part and the fixing base is of a contact between a plane and a plurality of arrayed bumps, at a position at which the bearing part is in contact with the fixing base, a structure of one of the bearing part and the fixing base is a complete planar structure, a structure of the other one of the bearing part and the fixing base is a multi-bump structure, and the multi-bump structure is disposed in correspondence with partial regions of the complete planar structure.

12. The image sensor drive module according to any one of claims 1 to 8, wherein a contact manner between the bearing part and the fixing base is of a contact between a plane and a protruding structure, at a position at which the bearing part is in contact with the fixing base, a structure of one of the bearing part and the fixing base is a complete planar structure, and a structure of the other one of the bearing part and the fixing base comprises the protruding structure.

13. The image sensor drive module according to claim 3, wherein the fixing base comprises the fixing platform and a fixing frame, the retention force is used to maintain contact between the bearing part and the fixing platform, the fixing frame is fixedly connected to an edge of the fixing platform, the fixing frame and the fixing platform define enclosed space, the drive unit, the connecting part, and a part of the bearing part are in the enclosed space, and the drive unit is located on a side that is of the bearing part and that is away from the fixing platform.

14. The image sensor drive module according to claim 3, wherein the fixing base comprises the fixing platform, the retention force is used to maintain contact between the bearing part and the fixing platform, the drive unit is located between the bearing part and the fixing platform, and the fixing member is fastened to the fixing platform.

15. The image sensor drive module according to any one of claims 1 to 8, wherein the bearing part comprises a first bearing platform and a second bearing platform, the first bearing platform is configured to bear the image sensor, the first bearing platform is in contact with the fixing base to form a contact surface, a direction perpendicular to the contact surface is a direction of an optical axis, the second bearing platform and the connecting part are stacked in the direction of the optical axis, and the movable member of the drive unit is fastened to the second bearing platform.

16. The image sensor drive module according to any one of claims 1 to 8, wherein the bearing part comprises a first plate and a second plate, an outer edge of the first plate is connected to the connecting part, accommodation space is formed by enclosing an inner edge of the first plate, the movable member is disposed on the first plate, the second plate comprises a first part and a second part, the first part and the first plate are stacked, the second part is located at the bottom of the accommodation space, the second part is configured to bear the image sensor, to enable the image sensor to be accommodated in the accommodation space, and the second plate is in contact with the fixing base.

17. A camera module, comprising an image sensor, a lens assembly, and the image sensor drive module according to any one of claims 1 to 16, wherein the image sensor is fastened to the image sensor drive module, and the lens assembly is located on a light incident side of the image sensor.

18. An electronic device, comprising a processor and the camera module according to claim 17, wherein the processor is electrically connected to the camera module, and the processor is configured to process an image signal output by an image sensor.

## Patentansprüche

1. Bildsensoransteuerungsmodul (2), wobei das Bildsensoransteuerungsmodul (2) in einem Kameramodul (10) verwendet wird und Folgendes umfasst:
• eine Antriebseinheit (22), umfassend ein Befestigungselement (221) und ein bewegbares Element (222), die sich relativ zueinander bewegen können;
• eine Befestigungsbasis (21), die dazu konfiguriert ist, das Befestigungselement (221) zu tragen; und
• eine bewegbare Basis (23), umfassend ein Lagerteil (231), ein Befestigungsteil (232) und ein Verbindungsteil (233), wobei das Verbindungsteil (233) dazu konfiguriert ist, eine mechanische und elektrische Verbindung zwischen dem Lagerteil (231) und dem Befestigungsteil (232) umzusetzen, das Lagerteil (231) dazu konfiguriert ist, einen Bildsensor und das bewegbare Element (222) zu tragen, und das Befestigungsteil (232) mit der Befestigungsbasis (21) verbunden ist,
• wobei eine Teilstruktur des Lagerteils (231) und eine Teilstruktur der Befestigungsbasis (21) eine Haltestruktur bilden, die Haltestruktur dazu konfiguriert ist, eine Haltekraft für das Lagerteil (231) bereitzustellen, die Antriebseinheit (22) dazu konfiguriert ist, das Lagerteil (231) anzutreiben, um sich relativ zu der Befestigungsbasis (21) zu bewegen, und der Kontakt zwischen dem Lagerteil (231) und der Befestigungsbasis (21) durch die Haltekraft der Haltestruktur aufrechterhalten wird,
• **dadurch gekennzeichnet, dass** das Verbindungsteil (233) der bewegbaren Basis (23) mindestens einen Teil der Haltestruktur bildet, das Verbindungsteil eine elastische Struktur aufweist und eine elastische Kraft des Verbindungsteils (233) auf das Lagerteil (231) wirkt, um die Haltekraft zu bilden, wobei ein Verbindungspunkt zwischen dem Verbindungsteil (233) und dem Befestigungsteil (232) eine erste Position ist, ein Verbindungspunkt zwischen dem Verbindungsteil (233) und dem Lagerteil (231) eine zweite Position ist, zwischen der ersten Position und der zweiten Position elastische potenzielle Energie vorhanden ist und die elastische potenzielle Energie mindestens einen Teil der Haltekraft bildet,
• wobei das Verbindungsteil (233) eine streifenförmige Federarmstruktur aufweist, die zwischen dem Befestigungsteil (232) und dem Lagerteil (231) verbunden ist, und das Lagerteil (231), das Verbindungsteil (233) und das Befestigungsteil (232) einstückig gebildet sind.

2. Bildsensoransteuerungsmodul nach Anspruch 1, wobei die Antriebseinheit dazu konfiguriert ist, das Lagerteil anzutreiben, sich relativ zu der Befestigungsbasis in einer Ebene senkrecht zu einer optischen Achse einer Linsenanordnung des Kameramoduls zu bewegen.

3. Bildsensoransteuerungsmodul nach Anspruch 2, wobei die Befestigungsbasis eine Befestigungsplattform umfasst, das Lagerteil mit einer Innenfläche der Befestigungsplattform in Kontakt steht, das Lagerteil dazu konfiguriert ist, den Bildsensor so zu tragen, dass er sich auf der Innenfläche der Befestigungsplattform bewegt, sich der Bildsensor auf der lichtaustretenden Seite der Linsenanordnung des Kameramoduls befindet, die Innenfläche der Befestigungsplattform senkrecht zu der optischen Achse der Linsenanordnung verläuft, ein Abstand, der zwischen der ersten Position und der Innenfläche der Befestigungsplattform liegt und in einer Richtung der optischen Achse der Linsenanordnung ist, kleiner ist als ein Abstand, der zwischen der zweiten Position und der Innenfläche der Befestigungsplattform liegt und in der Richtung der optischen Achse der Linsenanordnung ist, und die elastische Spannung des Verbindungsteils auf die zweite Position wirkt, um die Haltekraft in Richtung der Befestigungsplattform zu bilden.

4. Bildsensoransteuerungsmodul nach einem der Ansprüche 1 bis 3, wobei ein Magnetelement an dem Lagerteil angeordnet ist, das Magnetelement und ein Teil der Befestigungsbasis, der dazu konfiguriert ist, mit dem Lagerteil in Kontakt zu stehen, mindestens einen Teil der Haltestruktur bilden, der Teil der Befestigungsbasis, der dazu konfiguriert ist, in Kontakt mit dem Lagerteil zu stehen, ein magnetisch leitfähiges Material umfasst und eine magnetische Anziehungskraft zwischen dem Magnetelement und der Befestigungsbasis mindestens einen Teil der Haltekraft bildet.

5. Bildsensoransteuerungsmodul nach einem der Ansprüche 1 bis 3, wobei ein Magnetelement an der Befestigungsbasis angeordnet ist, ein Teil des Lagerteils ein magnetisch leitfähiges Material umfasst, der Teil des Lagerteils, der das magnetisch leitfähige Material umfasst, ein magnetisches Anziehungselement ist, das Magnetelement und das magnetische Anziehungselement mindestens einen Teil der Haltestruktur bilden, sich das Magnetelement an einer Position einer Kontaktfläche zwischen der Befestigungsbasis und dem Lagerteil befindet und eine magnetische Anziehungskraft zwischen dem Magnetelement und dem magnetischen Anziehungselement die Haltekraft bildet.

6. Bildsensoransteuerungsmodul nach einem der Ansprüche 1 bis 5, wobei an der Kontaktfläche zwischen dem Lagerteil und der Befestigungsbasis eine Reibungsschnittstelle gebildet ist und ein Reibungskoeffizient der Reibungsschnittstelle kleiner als 0,3 ist.

7. Bildsensoransteuerungsmodul nach Anspruch 6, wobei an einer Position der Reibungsfläche das Lagerteil und/oder die Befestigungsbasis eine reibungsarme Materialschicht umfasst/umfassen, und die reibungsarme Materialschicht eine feste Struktur aufweist und, dass der Reibungskoeffizient der Reibungsfläche kleiner als 0,3 ist, unter Verwendung der reibungsarmen Materialschicht umgesetzt wird.

8. Bildsensoransteuerungsmodul nach Anspruch 6, wobei die Reibungsfläche ein Material mit wärmeleitenden Eigenschaften umfasst und eine Wärmeleitfähigkeit der Reibungsfläche größer als 0,5 W/m*K ist.

9. Bildsensoransteuerungsmodul nach einem der Ansprüche 1 bis 8, wobei eine Kontaktart zwischen dem Lagerteil und der Befestigungsbasis ein Kontakt zwischen Ebenen ist, wobei eine Ebene, die sich auf dem Lagerteil befindet und die verwendet wird, um in Kontakt mit der Befestigungsbasis zu stehen, eine erste Ebene ist, eine Ebene, die sich auf der Befestigungsbasis befindet und die verwendet wird, um in Kontakt mit dem Lagerteil zu stehen, eine zweite Ebene ist, und sowohl die erste Ebene als auch die zweite Ebene durchgehende und vollständige ebene Strukturen sind.

10. Bildsensoransteuerungsmodul nach einem der Ansprüche 1 bis 8, wobei eine Kontaktart zwischen dem Lagerteil und der Befestigungsbasis ein Kontakt zwischen einer Ebene und arrangierten Höckern ist, an einer Position, an der das Lagerteil mit der Befestigungsbasis in Kontakt steht, eine Struktur von einem des Lagerteils und der Befestigungsbasis eine vollständige ebene Struktur ist, eine Struktur des anderen des Lagerteils und der Befestigungsbasis eine Struktur mit arrangierten Höckern ist und die Struktur mit arrangierten Höckern in Übereinstimmung mit allen Regionen der vollständigen ebenen Struktur angeordnet ist.

11. Bildsensoransteuerungsmodul nach einem der Ansprüche 1 bis 8, wobei eine Kontaktart zwischen dem Lagerteil und der Befestigungsbasis ein Kontakt zwischen einer Ebene und einer Vielzahl von arrangierten Höckern ist, an einer Position, an der das Lagerteil mit der Befestigungsbasis in Kontakt steht, eine Struktur von einem des Lagerteils und der Befestigungsbasis eine vollständige ebene Struktur ist, eine Struktur des anderen des Lagerteils und der Befestigungsbasis eine Mehrhöckerstruktur ist und die Mehrhöckerstruktur in Übereinstimmung mit Teilregionen der vollständigen ebenen Struktur angeordnet ist.

12. Bildsensoransteuerungsmodul nach einem der Ansprüche 1 bis 8, wobei eine Kontaktart zwischen dem Lagerteil und der Befestigungsbasis ein Kontakt zwischen einer Ebene und einer vorstehenden Struktur ist, an einer Position, an der das Lagerteil mit der Befestigungsbasis in Kontakt steht, eine Struktur von einem des Lagerteils und der Befestigungsbasis eine vollständige ebene Struktur ist, und eine Struktur des anderen des Lagerteils und der Befestigungsbasis die vorstehende Struktur umfasst.

13. Bildsensoransteuerungsmodul nach Anspruch 3, wobei die Befestigungsbasis die Befestigungsplattform und einen Befestigungsrahmen umfasst, die Haltekraft verwendet wird, um den Kontakt zwischen dem Lagerteil und der Befestigungsplattform aufrechtzuerhalten, der Befestigungsrahmen fest mit einer Kante der Befestigungsplattform verbunden ist, der Befestigungsrahmen und die Befestigungsplattform einen umschlossenen Raum bilden, die Antriebseinheit, das Verbindungsteil und ein Teil des Lagerteils sich in dem umschlossenen Raum befinden und sich die Antriebseinheit auf einer Seite befindet, die bei dem Lagerteil liegt und von der Befestigungsplattform entfernt ist.

14. Bildsensoransteuerungsmodul nach Anspruch 3, wobei die Befestigungsbasis die Befestigungsplattform umfasst, die Haltekraft verwendet wird, um den Kontakt zwischen dem Lagerteil und der Befestigungsplattform aufrechtzuerhalten, sich die Antriebseinheit zwischen dem Lagerteil und der Befestigungsplattform befindet und das Befestigungselement an der Befestigungsplattform befestigt ist.

15. Bildsensoransteuerungsmodul nach einem der Ansprüche 1 bis 8, wobei das Lagerteil eine erste Lagerplattform und eine zweite Lagerplattform umfasst, die erste Lagerplattform dazu konfiguriert ist, den Bildsensor zu tragen, die erste Lagerplattform mit der Befestigungsbasis in Kontakt steht, um eine Kontaktfläche zu bilden, eine Richtung senkrecht zu der Kontaktfläche eine Richtung einer optischen Achse ist, die zweite Lagerplattform und das Verbindungsteil in Richtung der optischen Achse gestapelt sind und das bewegbare Element der Antriebseinheit an der zweiten Lagerplattform befestigt ist.

16. Bildsensoransteuerungsmodul nach einem der Ansprüche 1 bis 8, wobei das Lagerteil eine erste Platte und eine zweite Platte umfasst, eine Außenkante der ersten Platte mit dem Verbindungsteil verbunden ist, durch Umschließen einer Innenkante der ersten Platte ein Aufnahmeraum gebildet wird, das bewegbare Element an der ersten Platte angeordnet ist, die zweite Platte einen ersten Teil und einen zweiten Teil umfasst, der erste Teil und die erste Platte gestapelt sind, der zweite Teil sich am Boden des Aufnahmeraums befindet, der zweite Teil dazu konfiguriert ist, den Bildsensor zu tragen, um zu ermöglichen, dass der Bildsensor in dem Aufnahmeraum aufgenommen ist, und die zweite Platte mit der Befestigungsbasis in Kontakt steht.

17. Kameramodul, umfassend einen Bildsensor, eine Linsenanordnung und das Bildsensoransteuerungsmodul nach einem der Ansprüche 1 bis 16, wobei der Bildsensor an dem Bildsensoransteuerungsmodul befestigt ist und sich die Linsenanordnung auf einer lichteinfallenden Seite des Bildsensors befindet.

18. Elektronische Vorrichtung, umfassend einen Prozessor und das Kameramodul nach Anspruch 17, wobei der Prozessor elektrisch mit dem Kameramodul verbunden ist und der Prozessor dazu konfiguriert ist, ein durch einen Bildsensor ausgegebenes Bildsignal zu verarbeiten.

## Revendications

1. Module d'entraînement de capteur d'image (2), dans lequel le module d'entraînement de capteur d'image (2) est utilisé dans un module de caméra (10) et comprend :
• une unité d'entraînement (22), comprenant un élément de fixation (221) et un élément mobile (222) qui peuvent se déplacer l'un par rapport à l'autre ;
• une base de fixation (21), configurée pour supporter l'élément de fixation (221) ; et
• une base mobile (23), comprenant une partie de roulement (231), une partie de fixation (232) et une partie de connexion (233), dans lequel la partie de connexion (233) est configurée pour assurer la liaison mécanique et électrique entre la partie de roulement (231) et la partie de fixation (232), la partie de roulement (231) étant configurée pour supporter un capteur d'image et l'élément mobile (222), et la partie de fixation (232) étant reliée à la base de fixation (21),
• dans lequel une structure partielle de la partie de roulement (231) et une structure partielle de la base de fixation (21) forment une structure de retenue, la structure de retenue est configurée pour fournir une force de retenue à la partie de roulement (231), l'unité d'entraînement (22) est configurée pour entraîner la partie de roulement (231) à se déplacer par rapport à la base de fixation (21), et le contact entre la partie de roulement (231) et la base de fixation (21) est maintenu par la force de retenue de la structure de retenue,
• **caractérisé en ce que** la partie de liaison (233) de la base mobile (23) forme au moins une partie de la structure de retenue, la partie de liaison est une structure élastique, et une force élastique de la partie de liaison (233) agit sur la partie de roulement (231) pour former la force de retenue, dans lequel un point de liaison entre la partie de liaison (233) et la partie de fixation (232) est une première position, un point de liaison entre la partie de liaison (233) et la partie de roulement (231) est une seconde position, une énergie potentielle élastique existe entre la première position et la seconde position, et l'énergie potentielle élastique forme au moins une partie de la force de retenue,
• dans lequel la partie de liaison (233) est une structure de bras à ressort en forme de bande reliée entre la partie de fixation (232) et la partie de roulement (231), et la partie de roulement (231), la partie de liaison (233) et la partie de fixation (232) sont formées de manière intégrale.

2. Module d'entraînement de capteur d'image selon la revendication 1, dans lequel l'unité d'entraînement est configurée pour entraîner la partie de roulement à se déplacer par rapport à la base de fixation dans un plan perpendiculaire à un axe optique d'un ensemble de lentilles du module de caméra.

3. Module d'entraînement de capteur d'image selon l'une quelconque de la revendication 2, dans lequel la base de fixation comprend une plateforme de fixation, la partie de roulement est en contact avec une surface intérieure de la plateforme de fixation, la partie de roulement est configurée pour supporter le capteur d'image se déplaçant sur la surface intérieure de la plateforme de fixation, le capteur d'image est situé du côté de l'ensemble de lentilles du module de caméra exposé à la lumière, la surface intérieure de la plateforme de fixation est perpendiculaire à l'axe optique de l'ensemble de lentilles, la distance entre la première position et la surface intérieure de la plateforme de fixation, dans la direction de l'axe optique de l'ensemble de lentilles, est inférieure à la distance entre la seconde position et la surface intérieure de la plateforme de fixation, dans la direction de l'axe optique de l'ensemble de lentilles, et la tension élastique de la partie de liaison agit sur la seconde position pour former la force de retenue vers la plateforme de fixation.

4. Module d'entraînement de capteur d'image selon l'une quelconque des revendications 1 à 3, dans lequel un élément magnétique est disposé sur la partie de roulement, l'élément magnétique et une partie de la base de fixation configurée pour être en contact avec la partie de roulement forment au moins une partie de la structure de retenue, la partie de la base de fixation configurée pour être en contact avec la partie de roulement comprend un matériau conducteur magnétique, et une force d'attraction magnétique entre l'élément magnétique et la base de fixation forme au moins une partie de la force de retenue.

5. Module d'entraînement de capteur d'image selon l'une quelconque des revendications 1 à 3, dans lequel un élément magnétique est disposé sur la base de fixation, une partie de la partie de roulement comprend un matériau conducteur magnétique, la partie de la partie de roulement comprenant le matériau conducteur magnétique est un élément d'attraction magnétique, l'élément magnétique et l'élément d'attraction magnétique forment au moins une partie de la structure de retenue, l'élément magnétique est situé à une position d'une surface de contact entre la base de fixation et la partie de roulement, et une force d'attraction magnétique entre l'élément magnétique et l'élément d'attraction magnétique forme la force de retenue.

6. Module d'entraînement de capteur d'image selon l'une quelconque des revendications 1 à 5, dans lequel une interface de friction est formée à la surface de contact entre la partie de roulement et la base de fixation, et un coefficient de friction de l'interface de friction est inférieur à 0,3.

7. Module d'entraînement de capteur d'image selon la revendication 6, dans lequel, à une position de l'interface de friction, la partie de roulement et/ou la base de fixation comprennent/comprend une couche de matériau à faible friction, et la couche de matériau à faible friction est de structure solide, et le fait que le coefficient de friction de l'interface de friction est inférieur à 0,3 est mis en œuvre à l'aide de la couche de matériau à faible friction.

8. Module d'entraînement de capteur d'image selon la revendication 6, dans lequel l'interface de friction comprend un matériau ayant des propriétés de conductivité thermique, la conductivité thermique de l'interface de friction étant supérieure à 0,5 W/m*K.

9. Module d'entraînement de capteur d'image selon l'une quelconque des revendications 1 à 8, dans lequel le mode de contact entre la partie de roulement et la base de fixation est un contact entre plans, un plan situé sur la partie de roulement et utilisé pour être en contact avec la base de fixation est un premier plan, un plan situé sur la base de fixation et utilisé pour être en contact avec la partie de roulement est un second plan, et le premier plan et le second plan sont tous deux des structures planes continues et complètes.

10. Module d'entraînement de capteur d'image selon l'une quelconque des revendications 1 à 8, dans lequel le mode de contact entre la partie de roulement et la base de fixation est un contact entre un plan et des bosses disposées en réseau, à une position où la partie de roulement est en contact avec la base de fixation, une structure de la partie de roulement ou de la base de fixation est une structure plane complète, une structure de l'autre partie de roulement ou de la base de fixation est une structure à bosses disposées en réseau, et la structure à bosses disposées en réseau est disposée en correspondance avec toutes les régions de la structure plane complète.

11. Module d'entraînement de capteur d'image selon l'une quelconque des revendications 1 à 8, dans lequel le mode de contact entre la partie de roulement et la base de fixation est un contact entre un plan et une pluralité de bosses disposées en réseau, à une position où la partie de roulement est en contact avec la base de fixation, une structure de la partie de roulement ou de la base de fixation est une structure plane complète, une structure de l'autre partie de roulement ou de la base de fixation est une structure à plusieurs bosses, et la structure à plusieurs bosses est disposée en correspondance avec des régions partielles de la structure plane complète.

12. Module d'entraînement de capteur d'image selon l'une quelconque des revendications 1 à 8, dans lequel le mode de contact entre la partie de roulement et la base de fixation est un contact entre un plan et une structure en saillie, à une position où la partie de roulement est en contact avec la base de fixation, une structure de la partie de roulement ou de la base de fixation est une structure plane complète, et une structure de l'autre partie de roulement ou de la base de fixation comprend la structure en saillie.

13. Module d'entraînement de capteur d'image selon la revendication 3, dans lequel la base de fixation comprend la plateforme de fixation et un cadre de fixation, la force de retenue est utilisée pour maintenir le contact entre la partie de roulement et la plateforme de fixation, le cadre de fixation est fixé à un bord de la plateforme de fixation, le cadre de fixation et la plateforme de fixation définissent un espace clos, l'unité d'entraînement, la partie de connexion et une partie de la partie de roulement se trouvent dans l'espace clos, et l'unité d'entraînement est située du côté de la partie de roulement et à l'opposé de la plateforme de fixation.

14. Module d'entraînement de capteur d'image selon la revendication 3, dans lequel la base de fixation comprend la plateforme de fixation, la force de retenue est utilisée pour maintenir le contact entre la partie de roulement et la plateforme de fixation, l'unité d'entraînement est située entre la partie de roulement et la plateforme de fixation, et l'élément de fixation est fixé à la plateforme de fixation.

15. Module d'entraînement de capteur d'image selon l'une quelconque des revendications 1 à 8, dans lequel la partie de roulement comprend une première plateforme de roulement et une seconde plateforme de roulement, la première plateforme de roulement est configurée pour supporter le capteur d'image, la première plateforme de roulement est en contact avec la base de fixation pour former une surface de contact, une direction perpendiculaire à la surface de contact est une direction d'un axe optique, la seconde plateforme de roulement et la partie de connexion sont empilées dans la direction de l'axe optique, et l'élément mobile de l'unité d'entraînement est fixé à la seconde plateforme de roulement.

16. Module d'entraînement de capteur d'image selon l'une quelconque des revendications 1 à 8, dans lequel la partie de roulement comprend une première plaque et une seconde plaque, un bord extérieur de la première plaque est relié à la partie de liaison, un espace de logement est formé en enfermant un bord intérieur de la première plaque, l'élément mobile est disposé sur la première plaque, la seconde plaque comprend une première partie et une seconde partie, la première partie et la première plaque sont empilées, la seconde partie est située au fond de l'espace de logement, la seconde partie est configurée pour supporter le capteur d'image, afin de permettre au capteur d'image d'être logé dans l'espace de logement, et la seconde plaque est en contact avec la base de fixation.

17. Module de caméra, comprenant un capteur d'image, un ensemble de lentilles et le module d'entraînement de capteur d'image selon l'une quelconque des revendications 1 à 16, dans lequel le capteur d'image est fixé au module d'entraînement de capteur d'image et l'ensemble de lentilles est situé du côté incident de la lumière du capteur d'image.

18. Dispositif électronique, comprenant un processeur et le module de caméra selon la revendication 17, dans lequel le processeur est électriquement connecté au module de caméra, et le processeur est configuré pour traiter un signal d'image émis par un capteur d'image.
